# EUROPÄISCHE PATENTSCHRIFT

(11) **EP 3 615 749 B1**
(45) Veröffentlichungstag und Bekanntmachung des Hinweises auf die Patenterteilung: **21.07.2021**
(21) Anmeldenummer: 18713580.1
(22) Anmeldetag: 15.03.2018
(51) Int. Cl.: E05B 13/00, E05B 13/10

(54) **FENSTER UND/ODER TÜRBESCHLAG**
WINDOW AND/OR DOOR FITTING
FERRURE POUR FÊNETRE OU PORTE

(30) Priorität: 28.04.2017 DE 102017109289
(43) Veröffentlichungstag der Anmeldung: 04.03.2020
(73) Patentinhaber: HOPPE AG, 39011 Lana (BZ) (IT)
(72) Erfinder: ALBER, Helmut, 39028 Schlanders (IT); ZEUS, Christian Josef Stephan, 39020 Stilfs (BZ) (IT)
(74) Vertreter: Patentanwälte Olbricht Buchhold Keulertz
(86) Internationale Anmeldenummer: PCT/EP2018/056611
(87) Internationale Veröffentlichungsnummer: WO 2018/197104

(56) Entgegenhaltungen:
- EP-A1- 1 544 383
- WO-A1-02/14634
- DE-A1- 10 100 874
- DE-A1-102014 103 994
- DE-C- 373 259
- DE-C- 670 268

## Beschreibung

Die Erfindung betrifft einen Beschlag zur Betätigung einer Mechanik in einer Tür oder in einem Fenster gemäß dem Oberbegriff von Anspruch 1.

Fenster oder Türbeschläge sind meist als Drehhandhaben ausgebildet. Solche Drehhandhaben oder auch Drehgriffe weisen zur Befestigung an einem Fensterflügel oder an einem Türblatt Anschlagmittel wie Rosetten, Anschlagkörper, Grundplatten oder dergleichen auf. Über einen in dem Beschlag sitzenden Mitnehmerstift, z.B. einen Mehrkant, meist ein Vierkantstift, wird eine dem Beschlag zugeordnete Mechanik, beispielsweise eine Schließmechanik, in dem Fensterflügel oder dem Türblatt betätigt.

Bei einer starren Verbindung zwischen dem Mehrkant und der Betätigungshandhabe besteht beispielsweise bei Fenstern die Gefahr, dass der Fensterflügel gegen den Fensterrahmen aufgehebelt wird und für die Verriegelung des Fensterflügels vorgesehene Zapfen von außen mittels eines Hebelwerkzeugs betätigt werden. Durch die starre Verbindung zwischen der Schließmechanik mit den Zapfen und dem Mehrkant im Beschlag werden gleichzeitig alle Zapfen, die das Fenster verriegeln, freigegeben. Bei einer solchen Ausgestaltung von Fenstern - und analog auch Türen - besteht folglich eine erhöhte Einbruchgefahr.

Zur Vermeidung dieser Einbruchgefahr wurden verschiedene Mechanismen entwickelt, welche die Betätigung des Vierkants von außen oder durch Manipulation der verriegelnden Zapfen, welche sich gewöhnlicher Weise in dem Fensterflügel oder in dem Türblatt befinden, erschweren.

DE 10 2014 103 994 A1 beschreibt beispielsweise eine Griffvorrichtung, bei der ein Mitnahmeelement zur Betätigung des Schließmechanismus in einem Handgriff angeordnet ist. Zur Sicherung der Griffvorrichtung gegen unbefugte Betätigung von außen ist ein Rastmechanismus vorgesehen, der durch Versetzen des Handgriffs relativ zum Anschlagkörper in eine Sperrposition die Drehung des Handgriffs blockiert. Um die Schließmechanik des Fensters oder der Tür betätigen zu können, wird der Handgriff durch eine Bewegung relativ zum Anschlagkörper in eine Freigabestellung versetzt, wodurch die Blockierung durch den Rastmechanismus aufgehoben wird. Der Rastmechanismus wird von einer Hülse gebildet, die endseitig Riegelnocken aufweist, welche in der Sperrposition der Griffvorrichtung in Riegeltaschen des Anschlagkörpers eingreifen. Auf diese Weise ist auch das Mitnahmeelement, das mit dem Schließmechanismus des Fensters oder der Tür in Eingriff steht, gesperrt und das Fenster bzw. die Tür kann von außen nicht manipuliert werden.

Aus WO 02/14634 A1 und DE 670 268 C sind kindersichere Beschläge mit einer axialen Entkopplung des Griffs vom Mehrkant bekannt.

EP 1 544 383 A1 zeigt eine Fehlschaltsicherung für ein Fenster, eine Tür oder dergleichen mit einem Treibstangenbeschlag, wobei die Fehlschaltsicherung eine Handhabe mit Blockiermittel vorsieht. Die Blockiermittel erzeugen einen Formschluss zwischen der Handhabe und einem feststehenden Bauteil und lassen sich durch Druck auf die Handhabe lösen. Bei einem Druck auf die Handhabe wird ein Flügel des Fensters gegen einen Rahmen gedrückt, wodurch der Treibstangenbeschlag verstellt werden kann.

Die DE 101 00874 A1 offenbart einen Beschlag zur Betätigung einer Mechanik in einer Tür oder in einem Fenster, mit einem Griff, der drehbar um eine Drehachse an oder in einem Anschlagkörper gelagert ist, wobei der Anschlagkörper an der Tür oder dem Fenster befestigbar ist, mit einem Mehrkant zur Betätigung der Mechanik in der Tür oder in dem Fenster, mit einem Koppelelement zur Kopplung des Griffs mit dem Mehrkant, wobei in einer ersten Griffposition der Griff von dem Mehrkant abgekoppelt ist, und wobei in einer zweiten Griffposition das Koppelelement den Griff an den Mehrkant koppelt.

DE 373 259 C offenbart einen Beschlag zur Betätigung einer Mechanik in einer Tür oder in einem Fenster, mit einem Griff, der drehbar um eine Drehachse an oder in einem Anschlagkörper gelagert ist, wobei der Anschlagkörper an der Tür oder dem Fenster befestigbar ist, mit einem Mehrkant zur Betätigung der Mechanik in der Tür oder in dem Fenster, und mit einer Sperrvorrichtung, die in einer Sperrstellung die Betätigung des Mehrkants um die Drehachse sperrt, wobei die Sperrvorrichtung durch axiale Betätigung des Griffs von einer ersten Griffposition in eine zweite Griffposition entlang der Drehachse in eine Freigabestellung überführbar ist.

Aufgabe der Erfindung ist es, einen Beschlag zur Betätigung einer Mechanik in einer Tür oder in einem Fenster bereitzustellen, der gegenüber dem Stand der Technik eine einfache und dauerhaft zuverlässige Mechanik aufweist. Der Beschlag soll ferner einen erhöhten Schutz gegen unbefugte Betätigung des Beschlags oder der mit dem Beschlag verbundenen Mechanik im Fenster oder der Tür gewährleisten und einfach zu handhaben sein. Angestrebt wird ferner ein ebenso einfacher wie kostengünstiger Aufbau.

Hauptmerkmale der Erfindung sind im kennzeichnenden Teil von Anspruch 1 angegeben. Ausgestaltungen sind Gegenstand der Ansprüche 2 bis 15.

Bei einem Beschlag zur Betätigung einer Mechanik in einer Tür oder in einem Fenster, mit einem Griff, der drehbar um eine Drehachse an oder in einem Anschlagkörper gelagert ist, wobei der Anschlagkörper an der Tür oder in dem Fenster befestigbar ist, mit einem Mehrkant zur Betätigung der Mechanik in der Tür oder in dem Fenster, mit einem Koppelelement zur Kopplung des Griffs mit dem Mehrkant, und mit einer Sperrvorrichtung, die in einer Sperrstellung die Betätigung des Mehrkants um die Drehachse sperrt, wobei die Sperrvorrichtung durch axiale Betätigung des Griffs von einer ersten Griffposition in eine zweite Griffposition entlang der Drehachse in eine Freigabestellung überführbar ist, sieht die Erfindung vor, dass in der ersten Griffposition der Griff von dem Mehrkant abgekoppelt ist, wobei sich die Sperrvorrichtung in der Sperrstellung befindet, und dass in der zweiten Griffposition das Koppelelement den Griff an den Mehrkant koppelt und die Sperrvorrichtung in der Freigabestellung hält.

Durch das Abkoppeln des Griffs von dem Mehrkant in der ersten Griffposition ist sichergestellt, dass das Fenster oder die Tür nicht versehentlich betätigt werden kann, weil die Mechanik im Fenster oder in der Tür erst dann betätigbar ist, wenn der Griff in die zweite Griffposition verbracht worden ist. Gleichzeitig verhindert die Sperrvorrichtung im Beschlag - solange der Griff sich in der ersten Griffposition befindet - jedwede Betätigung des Mehrkants, d.h. das Fenster oder die Tür kann nicht unbefugt von außen manipuliert und geöffnet werden.

Für die Öffnung des Fensters oder der Tür ist eine zweistufige Bewegung des Griffs nötig. Zunächst muss der Griff von der ersten Griffposition in die zweite Griffposition überführt werden. Anschließend muss der Griff um seine Drehachse gedreht werden.

Die zweistufige Bewegung des Griffs ist insbesondere für Kinder nur schwer durchzuführen, was bereits zu einer erhöhten Sicherheit beiträgt. Durch die Sperrvorrichtung wird jedoch zudem wirksam verhindert, dass eine unbefugte Betätigung des Mehrkants und damit der Mechanik von außen möglich ist. Diese Sperrung wird erst aufgehoben, wenn der Griff von der ersten Griffposition in die zweite Griffposition gebracht wird. Dabei koppelt das Koppelelement den Griff an den Mehrkant. Gleichzeitig wird die Sperrvorrichtung von ihrer Sperrstellung in die Freigabestellung verbracht. Der Griff und damit das Fenster bzw. die Tür kann anschließend wie gewohnt betätigt werden.

Die Kombination aus Entkopplung und Sperrvorrichtung führt mithin zu einer erhöhten Bedien-und Einbruchssicherheit, indem die Sperrvorrichtung in einer Sperrstellung ist, wenn sich der Griff in der ersten Griffposition befindet. Somit ergibt sich der Vorteil, dass bei einem in einer Schließstellung befindlichen Fenster oder Tür der Griff in der ersten Griffposition ist und die Drehung des Mehrkants um die Drehachse durch die Sperrvorrichtung verhindert wird. Sobald das Fenster oder die Tür in eine Offenstellung gebracht werden soll, gelangt die Sperrvorrichtung durch die Betätigung des Griffs relativ zum Anschlagkörper in die Freigabestellung, wodurch der Mehrkant - durch die zwischen dem Mehrkant und dem Griff hergestellte Kopplung - mittels des Koppelelements um die Drehachse rotierbar ist.

Eine wichtige Ausgestaltung sieht vor, dass das Koppelelement mindestens ein Betätigungselement für die Sperrvorrichtung aufweist. Durch das Vorsehen eines solchen Betätigungselements ergibt sich der Vorteil, dass die Sperrvorrichtung jederzeit zuverlässig betätigbar und in die Freigabestellung bringbar ist. Lässt man den Griff los bzw. verbringt man diesen wieder in die erste Griffposition, gelangt die Sperrvorrichtung wieder in die Sperrstellung.

In einer weiteren Ausbildung der Erfindung ist vorgesehen, dass die Sperrvorrichtung mindestens ein Sperrelement aufweist, das separat in dem Anschlagkörper angeordnet oder ausgebildet ist. Dies ermöglicht eine äußerst robuste Ausgestaltung der Sperrvorrichtung mit Wälzkörpern, Riegelkörpern, Bolzen u.dgl., die damit einen deutlich erhöhten Einbruchschutz gewährleistet, wobei der Griff und damit die Mechanik im Fenster oder in der Tür nur dann betätigbar ist, wenn der Griff in die zweite Griffposition und damit in die die Kopplungsstellung zum Mehrkant verbracht worden ist und wenn in dieser Position die Betätigungselemente die Sperrelemente der Sperrvorrichtung in die Freigabestellung gebracht haben.

Ergänzend dazu sieht die Erfindung vor, dass in dem Anschlagkörper für jedes Sperrelement eine Ausnehmung vorgesehen ist. Diese werden mithin innerhalb des Anschlagkörpers zuverlässig und präzise geführt und sorgen damit innerhalb der Sperrstellung für eine dauerhaft zuverlässige Sperrung des Mehrkants.

Mit Vorteil sind die Sperrelemente in Bezug auf die Drehachse radial oder axial bewegbar. Außerdem ist gemäß einer Ausgestaltung vorgesehen, dass die Sperrelemente innerhalb der Ausnehmungen in Bezug auf die Drehachse radial oder axial bewegbar sind.

Man erkennt, dass die Sperrelemente die Bewegung des Mehrkants und damit die Bewegung der Mechanik in der Sperrstellung kontrolliert blockieren, wodurch - bei konstruktiv einfachem und kostengünstigem Aufbau des Beschlags - eine erhöhte Einbruchssicherheit gegeben ist. Durch die Aussparungen im Anschlagkörpers sind die Sperrelemente in vorteilhafter Weise gegenüber dem zu sperrenden Mehrkant geführt und positionierbar. Durch die axiale oder radiale Beweglichkeit lassen sich die Sperrelemente zudem rasch und präzise von den Betätigungselementen aus der Sperrstellung in die Freigabestellung und umgekehrt bewegen. Insbesondere durch eine radiale Beweglichkeit und Ausrichtung der Sperrelemente lässt sich eine sehr geringe Bauhöhe des Anschlagkörpers realisieren.

Ferner ist gemäß einer Ausgestaltung der Erfindung vorgesehen, dass jedes Sperrelement in Bezug auf die Drehachse in axialer oder in radialer Richtung mit einer Kraft beaufschlagt ist, die vorzugsweise von einer Feder erzeugt wird, d.h. jedes Sperrelement ist mittels einer Feder vorgespannt in einer der Ausnehmungen gelagert.

Durch die Vorspannung der Sperrelemente müssen diese von den Betätigungselementen entgegen der Kraftwirkung der Feder in die Freigabestellung gebracht werden. Bringt man hingegen den Griff wieder in die erste Griffposition, drücken die Federn die Sperrelemente automatisch wieder in die Sperrstellung zurück, so dass der Mehrkant und damit der Beschlag stets zuverlässig gesperrt ist. Dies erleichtert den Handhabungsaufwand des Beschlags zur Überführung der Sperrvorrichtung von der Sperrstellung in die Freigabestellung.

Alternativ ist auch der umgekehrte Fall denkbar, dass die Freigabestellung durch die Vorspannung gehalten wird und die Sperrstellung durch die Betätigung des Koppelelements herstellbar ist.

In einer Weiterbildung ist vorgesehen, dass die Sperrelemente in der Sperrstellung mit dem Mehrkant direkt oder indirekt in Eingriff stehen. So ist in vorteilhafter Weise die Ausbildung eines besonders platzsparenden Aufbaus der Sperrvorrichtung möglich. Durch diesen entsteht ein optisch ansprechendes Erscheinungsbild des Anschlagkörpers an dem Türblatt oder dem Fensterrahmen und somit ein besonders ästhetischer Gesamteindruck des Beschlags.

Gemäß einer wichtigen und vorteilhaften Weiterbildung der Erfindung ist vorgesehen, dass das Koppelelement zweiteilig ausgebildet ist, wobei das Koppelelement einen Griffmitnehmer aufweist, der drehfest mit dem Griff verbunden ist, und einen Mehrkantmitnehmer aufweist, der drehfest mit dem Mehrkant verbunden ist. Die Zweiteilung des Koppelelements hat den Vorteil, dass eine besonders zuverlässige und präzise Betätigung der Sperrvorrichtung möglich ist, die zudem einfach und kostengünstig realisierbar ist. Darüber hinaus ist in vorteilhafter Weise eine stets zuverlässige Kopplung zwischen dem Griff und dem Mehrkant möglich, insbesondere wenn der Griffmitnehmer und der Mehrkantmitnehmer ineinander greifen.

Der Griffmitnehmer ist bevorzugt in dem Griff angeordnet bzw. festgelegt, während der Mehrkantmitnehmer auf oder an dem Mehrkant ausgebildet ist.

Konstruktiv ist es günstig, wenn die Betätigungselemente des Koppelelements an dem Griffmitnehmer ausgebildet sind. Die Betätigung der Sperrvorrichtung erfolgt hierbei in vorteilhafter Weise nur dann, wenn die Kopplung hergestellt ist, also dann, wenn der Griff in der zweiten Griffposition befindlich ist.

In einer Ausbildung ist vorgesehen, dass der Griffmitnehmer einen Flanschabschnitt aufweist, an dem die Betätigungselemente angeordnet bzw. ausgebildet sind, wobei die Betätigungselemente bevorzugt an einer dem Anschlagkörper zugewandten Stirnfläche des Flanschabschnitts liegen. Der Flanschabschnitt trägt dazu bei, dass das Koppelelement zuverlässig im Anschlagkörper gelagert ist. Zudem bildet der Flanschabschnitt eine größere Fläche für die Aufnahme oder Ausbildung der Betätigungselemente, so dass diese für die Betätigung der Sperrvorrichtung geeignet dimensionierbar sind.

Für die zuverlässige Kopplung des Griffs an den Mehrkant über den Griffmitnehmer und den Mehrkantmitnehmer, sieht die Erfindung weiter vor, dass an dem Griffmitnehmer bzw. an dessen Flansch mindestens ein Eingriffselement angeordnet ist. Letzteres bzw. letztere sind bevorzugt an der Stirnfläche des Flanschabschnitts angeordnet oder ausgebildet. Durch die Anordnung der Eingriffselemente am Flansch ergibt sich der Vorteil, dass die Eingriffselemente auf einer größeren Fläche anordenbar sind, wodurch die Eingriffselemente größer ausgestaltbar sind und somit größere Kräfte über die Eingriffselemente übertragbar sind. Damit wird eine dauerhaft zuverlässig wirkende Kopplung gewährleistet.

Eine weitere optionale konstruktive Maßnahme sieht vor, dass die Eingriffselemente mit den Betätigungselementen einstückig ausgebildet sind. Dadurch ergibt sich vorteilhaft eine höhere Festigkeit gegenüber der separaten Ausgestaltung der Elemente.

Für zuverlässige Verankerung des Griffmitnehmers im Griff ist vorgesehen, dass der Griffmitnehmer einen Halsabschnitt aufweist, wobei vorgesehen ist, dass der Griffmitnehmer für eine drehfeste Verbindung griffseitig einen Mehrkantbereich aufweist. Überdies weist der Griffmitnehmer für die Aufnahme des Mehrkantmitnehmers einen sich in axialer Richtung erstreckenden Aufnahmeraum auf.

Nach einer bevorzugten Ausführungsform ist der Griffmitnehmer in dem Griffhals durch ein Befestigungsmittel festgelegt, z.B. mittels einer Schraube, wobei der Griffmitnehmer zusätzlich oder alternativ auch stoffschlüssig, etwa durch Verklebung, drehfest mit dem Griffhals verbunden sein kann. Der Halsbereich ist hierbei vorteilhaft als Kontaktfläche ausgebildet. Durch den Mehrkantbereich wird die Drehfestigkeit der Verbindung zwischen dem Griff und dem Griffmitnehmer unterstützt.

Der Aufnahmeraum in dem Griffmitnehmer dient in vorteilhafter Weise der längsverschieblichen Aufnahme des Mehrkants und/oder des Mehrkantmitnehmers, wobei eine Begrenzung in axialer Richtung als Anschlagpunkt für eine Feder nutzbar ist. Mit dieser ist ein in den Aufnahmeraum eingebrachter Mehrkant und/oder der eingebrachte Mehrkantmitnehmer vorgespannt gegenüber dem Anschlagkörper. Diese Vorspannung kann vorteilhafterweise als Gegenkraft gegen die Überführung des Griffs von der ersten Griffposition in die zweite Griffposition genutzt werden. Bevorzugt kann zusätzlich eine Außenfeder zwischen dem Griff und dem Anschlagkörper angeordnet sein, die den Griff gegenüber dem Anschlagkörper auf Spannung hält. Gleichzeitig lässt sich dadurch die Länge des Mehrkants, die aus dem Anschlagkörper fenster- bzw. türseitig heraussteht variieren.

Gemäß einer Weiterbildung der Erfindung ist vorgesehen, dass der Mehrkantmitnehmer mindestens eine Sperrausnehmung zur Aufnahme der Sperrelemente aufweist, wobei nach einer Ausgestaltung vorgesehen ist, dass der Mehrkantmitnehmer einen ersten Flanschabschnitt aufweist und, wobei gemäß einer Weiterbildung die Sperrausnehmungen in dem ersten Flanschabschnitt angeordnet sind, wobei gemäß einer Ausgestaltung die Sperrausnehmungen umfangsseitig in einer Umfangsfläche des ersten Flanschabschnitts angeordnet sind.

Durch die Sperrausnehmungen im Mehrkantmitnehmer sind die Sperrelemente zuverlässig mit dem Mehrkantmitnehmer in Eingriff bringbar, wobei die Sperrausnehmungen auf die Größe und Abmessungen der Sperrelemente optimal abstimmbar sind, um auf den Mehrkant und/oder den Mehrkantmitnehmer von außen einwirkende Kräfte oder Drehmomente dauerhaft zuverlässig aufnehmen zu können.

Der erste Flanschabschnitt des Mehrkantmitnehmers ist bevorzugt an einem dem Anschlagkörper zugewandten Ende des Mehrkantmitnehmers angeordnet und liegt besonders bevorzugt benachbart zu einem Boden- oder Öffnungsabschnitt des Anschlagkörpers. Durch den Flanschabschnitt des Mehrkantmitnehmers wird in vorteilhafter Weise ein Kippen des Mehrkants und/oder des Mehrkantmitnehmers gegen die Drehachse weiter erschwert. Dadurch ergibt sich der Vorteil, dass der Beschlag auch bei starker Beanspruchung senkrecht zur Drehachse stets zuverlässig betätigbar ist. Die Anordnung der Sperrausnehmungen in dem Flanschabschnitt ist weiter von Vorteil, da in einer auf die Drehachse bezogenen radialen Richtung das Haltemoment der in der Sperrstellung befindlichen Sperrvorrichtung mit zunehmendem Abstand vom Mehrkant und/oder Zentrum des Mehrkantmitnehmers größer wird. Gleiches gilt für die in der Umfangsfläche angeordneten Sperrausnehmungen.

Gemäß einer weiteren vorteilhaften Ausgestaltung ist vorgesehen, dass in dem ersten Flanschabschnitt vorzugsweise stirnseitig in Richtung Griff mindestens eine Ausnehmung vorgesehen ist. Diese Ausnehmung dient der formschlüssigen Aufnahme des Griffmitnehmers, wenn der Griff von der ersten Griffposition in die zweite Griffposition gelangt ist und das Koppelelement - bestehend aus Griffmitnehmer und Mehrkantmitnehmer - den Griff an den Mehrkant koppelt. Die Ausnehmung ist bevorzugt in Richtung Anschlagkörper bodenseitig geschlossen.

Eine wichtige Weiterbildung der Erfindung besteht darin, dass die Betätigungselemente des Koppelelements und/oder des Griffmitnehmers in der zweiten Griffposition in die Sperrausnehmungen des Mehrkantmitnehmers eingreifen. Vorzugsweise ist dabei weiter vorgesehen, dass die Betätigungselemente in der zweiten Griffposition formschlüssig in den Sperrausnehmungen des Mehrkantmitnehmers einliegen und diese besonders bevorzugt verschließen. Hierbei ist vorgesehen, dass die Umfangsfläche des Mehrkantmitnehmers in der zweiten Griffposition komplettiert wird.

Der Eingriff der Betätigungselemente des Koppelelements und/oder des Griffmitnehmers in die Sperrausnehmungen des Mehrkantmitnehmers führt zur Entsperrung der Sperrvorrichtung, indem die Sperrelemente aus dem Mehrkant oder dem Mehrkantmitnehmer verdrängt werden. Zudem ergibt sich durch das formschlüssige Eingreifen der Betätigungselemente in die Sperrausnehmungen ein Formschluss und damit eine Kopplung, die eine zuverlässige Drehmomentübertragung von dem Griff auf den Mehrkant ermöglicht. Das zweiteilige Koppelelement entsperrt somit bei Erreichen der zweiten Griffposition des Griffs die Sperrvorrichtung und koppelt gleichzeitig den Griff an den Mehrkant.

Durch das Verschließen der Sperrausnehmungen entsteht weiterhin der Vorteil, dass die Sperrausnehmungen in der zweiten Griffposition nicht mehr mit der Sperrvorrichtung in Eingriff bringbar sind. Es entsteht vielmehr eine im wesentlichen glatte Außenfläche am Mehrkantmitnehmer, die ein Verhaken oder Verklemmen des ersten Flanschabschnitts beim Drehen in dem Anschlagkörper mit anderen Elementen des Beschlags verhindert.

Bevorzugt ist vorgesehen, dass die Betätigungselemente in der zweiten Griffposition nicht nur in die Sperrausnehmungen des ersten Flanschabschnitts des Mehrkantmitnehmers eingreifen. Sie greifen zudem bevorzugt formschlüssig auch in die Ausnehmungen im Flanschabschnitt des Mehrkantmitnehmers ein. Dadurch tragen auch die Wandungen der Ausnehmungen und die Seitenflächen der Betätigungselemente zur Drehmomentübertragung zwischen Griffmitnehmer und Mehrkantmitnehmer bei. Folglich lassen sich größere Drehmomente von dem Griff auf den Mehrkant übertragen. Dies ist insbesondere dann von Vorteil, wenn über den Mechanismus große Kräfte, etwa bei großen Fenstern oder Türen mit vielen Verriegelungen oder Zapfen, übertragen werden müssen.

Dazu tragen auch die Eingriffselemente am Griffmitnehmer bei, insbesondere dann, wenn diese einstückig mit den Betätigungselementen ausgebildet sind.

Befindet sich jedoch der Griff in der ersten Griffposition, stehen Griffmitnehmer und Mehrkantmitnehmer außer Eingriff, so dass die Sperrvorrichtung verhindert, dass der Mehrkant unbefugt betätigt werden kann.

Gemäß einer Weiterbildung der Erfindung ist vorgesehen, dass der Mehrkantmitnehmer eine Mehrkantaufnahme aufweist, wobei diese bevorzugt formgleich mit dem Mehrkant ist. Weiter ist vorgesehen, dass der Mehrkant in die Mehrkantaufnahme eingreift.

Auf diese Weise ist der Griffmitnehmer des Koppelelements oder - wenn das Koppelelement einteilig ausgebildet - das Koppelelement zuverlässig mit dem Mehrkant in Eingriff bringbar, d.h. in der zweiten Griffposition kann stets zuverlässig ein Drehmoment von dem Griff auf den Mehrkant übertragen werden.

Die Drehmomentübertragung kann so bevorzugt über die Mehrkantaufnahme, die insbesondere formgleich mit dem Mehrkant ist, erfolgen. Dies wird weiterhin vorteilhaft dadurch erreicht, dass der Mehrkant mit der Mehrkantaufnahme in Eingriff, vorzugsweise in formschlüssigem Eingriff steht. Somit wird Spiel zwischen dem Mehrkant und der Mehrkantaufnahme und über die Drehmomentübertragung des Koppelelements auch zwischen dem Griff und dem Mehrkant wirksam vermieden.

In einer weiteren Ausgestaltung ist vorgesehen, dass der Mehrkantmitnehmer griffseitig einen Halsabschnitt aufweist, wobei bevorzugt vorgesehen ist dass der Halsabschnitt griffseitig abgeschlossen ist und eine Feder zwischen dem Abschluss und dem Mehrkant angeordnet ist.

Das Vorsehen eines Halsabschnitts hat den Vorteil, dass der Mehrkantmitnehmer mit seinem Halsabschnitt in dem Aufnahmeraum des Halsabschnitts des Griffmitnehmers über eine längere Distanz geführt ist. Diese axiale Führung entlang der Drehachse trägt zur Verwindungssteifigkeit des Beschlags und insbesondere der in dem Beschlag angeordneten Antriebselemente der Mechanik bei. Weiterhin ist der Halsabschnitt von Vorteil, wenn der Mehrkantmitnehmer in Bezug auf die Drehachse axial verschieblich auf dem Mehrkant gelagert ist und/oder der Mehrkant in Bezug auf die Drehachse axial verschieblich in dem Mehrkantmitnehmer gelagert ist. Dabei bildet der Halsabschnitt des Mehrkantmitnehmers gemeinsam mit dem Griffmitnehmer eine sich in der axialen Richtung entlang der Drehachse erstreckende Führung. In diesem Zusammenhang ist die Federbelastung bzw. Vorspannung des Mehrkantmitnehmers und/oder des Mehrkants vorteilhaft, da der Mehrkant so an unterschiedliche Einbautiefen anpassbar ist.

Gemäß einer Ausgestaltung ist vorgesehen, dass der Mehrkantmitnehmer einen zweiten Flanschabschnitt aufweist, wobei gemäß einer Weiterbildung vorgesehen ist, dass der zweite Flanschabschnitt sich griffseitig an den ersten Flanschabschnitt anschließt.

Der zweite Flanschabschnitt ist von Vorteil, da hierdurch die Stabilität des Mehrkantmitnehmers gegenüber Torsion erhöht wird. Insbesondere muss der Mehrkantmitnehmer in der Sperrstellung der Sperrvorrichtung bei einer unbefugten Betätigung der Schließmechanik über ein oder mehrere Riegelelemente des Fensterflügels oder des Türblatts die aufgebrachten Kräfte aufnehmen und darf mechanisch nicht versagen, da ansonsten der Mechanismus für die Betätigung der verbleibenden der Riegelelemente freigegeben ist.

Gemäß einem weiteren Aspekt der Erfindung ist vorgesehen, dass in dem zweiten Flanschabschnitt oder in dem ersten Flanschabschnitt umfangsseitig mindestens eine Rastmulde für mindestens ein Rastelement angeordnet ist, wobei bevorzugt vorgesehen ist, dass das Rastelement in dem Anschlagkörper angeordnet ist. In einer Ausgestaltung ist vorgesehen, dass das Rastelement durch eine Rastelementfeder radial gegen den ersten Flanschabschnitt oder gegen den zweiten Flanschabschnitt des Mehrkantmitnehmers vorgespannt ist.

Das Vorsehen der Rastelemente und der Rastmulden ist von Vorteil, da bei Betätigung des Griffs Raststellungen erzeugbar sind. Insbesondere gestalten sich hierbei die bei einer Rotation um die Drehachse erreichten Raststellungen 90 Grad und 180 Grad zur ersten Griffposition vorteilhaft, da bei einer darauf abgestimmten Funktionalität der Mechanik des Türblatts oder des Fensterflügels verschiedene Zustände, wie beispielsweise eine Kippstellung oder eine Offenstellung, haptisch an den Benutzer rückgekoppelt werden. Die Anordnung der Rastelemente in dem Anschlagkörper gestaltet sich insbesondere dadurch vorteilhaft, dass diese Anordnung platzsparend ist.

Ein weiterer Aspekt der Erfindung sieht vor, dass der Griffmitnehmer mindestens einen Positioniersteg aufweist, wobei bevorzugt die Positionierstege griffseitig an dem Flanschabschnitt angeordnet sind und besonders bevorzugt der Anschlagkörper mindestens eine Positioniertasche für die Positionierstege aufweist. Ein weiterer Aspekt sieht vor, dass der Positioniersteg in der ersten Griffposition mit der Positioniertasche in Eingriff bringbar ist.

Durch das Vorsehen der Positionierstege ist der Griff in der ersten Griffposition über den mit dem Griff drehfest verbundenen Griffmitnehmer vorteilhaft in einer definierten Position positionierbar und festlegbar. Insbesondere die Anordnung der Positionierstege an der dem Griff zugewandten Seite des Flanschabschnitts des Griffmitnehmers gestaltet sich hierbei vorteilhaft, da auf diese Weise ein Eingriff, beispielsweise mit dem ortsfesten Anschlagkörper über die Positioniertaschen herstellbar ist.

In einer Weiterbildung der Erfindung ist vorgesehen, dass der Anschlagkörper eine Verstärkung aufweist, die in dem Anschlagkörper einliegt und mindestens eine Aussparung aufweist, die im Eingriffsbereich des Positionierstegs mit der Positioniertasche liegt.

Die Verstärkung nimmt bevorzugt Kräfte auf, die entstehen, wenn der Griff um die Drehachse rotiert wird. Besonders bevorzugt sind die Aussparungen um die Positioniertaschen angeordnet, sodass Kräfte, die gegen den Eingriff der Positionierstege mit den Positioniertaschen wirken, über die Verstärkung abgeleitet werden und eine Aufnahme der Kräfte durch den Anschlagkörper weitestgehend vermieden wird. So kann der Anschlagkörper auch aus mechanisch weniger widerstandsfähigen Materialien oder besonders platzsparend ausgestaltet werden. Die Verstärkung besteht vorzugsweise aus Metall und ist bevorzugt plattenartig.

Gemäß einer weiteren Ausgestaltung der Erfindung ist vorgesehen, dass in der zweiten Griffposition die Positionierstege mit den jeweiligen Positioniertaschen außer Eingriff stehen.

Hieraus ergibt sich, dass der Griff in der ersten Griffposition, in der das Koppelelement nicht gekoppelt ist, nicht um die Drehachse bewegbar ist. Der Griff hat also keine Wirkverbindung über den Mehrkant zur Mechanik.

Die derartige Positionierung des Griffs hat den Vorteil, dass der Griff in der ersten Griffposition keinen Freilauf hat. Erst die axiale Bewegung des Griffs in die zweite Griffposition entlang der Drehachse bringt die Positionierstege mit den Positioniertaschen außer Eingriff. Bevorzugt ist der Weg, der benötigt wird, die Positionierstege mit den Positioniertaschen außer Eingriff zu bringen, so lang, wie der Weg, der benötigt wird, die Betätigungselemente und/oder die Eingriffselemente mit den Ausnehmungen und/oder den Sperrausnehmungen in Eingriff zu bringen. Auf diese Weise wird vorteilhaft vermieden, dass der Griff vor und während der Betätigung in einer undefinierten Position ist.

Weiterhin ist der Griff bevorzugt immer dann in der zweiten Griffposition, wenn der Griff um die Drehachse rotiert ist. Dies ist durch eine entsprechende Anordnung der Positionierstege und der Positioniertaschen in unterschiedlichen Winkelpositionen bezogen auf die Drehachse des Griffs erreichbar.

In einer alternativen Ausgestaltung ist der Griff in einer Raststellung, die beispielsweise die 90 Grad-Stellung für eine Offenstellung eines Fensterflügels oder für ein Türblatt sein kann, oder in einer 180 Grad Stellung, beispielsweise für die Kippstellung eines Fensterblatts und/oder einer Tür, durch eine entsprechende Anordnung in die erste Griffposition überführbar. Auf diese Weise wären die Betätigungselemente mit der Sperrvorrichtung auch in diesen Stellungen außer Eingriff und der Griff müsste abermals axial entlang der Drehachse bewegt und anschließend rotiert werden, um eine Betätigung der Mechanik zu bewirken. Diese Komplikation ist insbesondere dann von Vorteil, wenn die Bedienung des Griffs erschwert werden soll.

Weiterhin kann in einer Ausgestaltung vorgesehen sein, dass der Griff eine Verriegelungsvorrichtung zu dessen axialer Festlegung aufweist, wobei in einer Weiterbildung vorgesehen ist, dass die Verriegelungsvorrichtung einen Schließzylinder mit einem Riegelelement aufweist. Dies kann beispielsweise ein Bolzen sein, der in einer Riegelposition an dem Anschlagkörper anliegt und den Griff in der ersten Griffposition hält. In einer Ausgestaltung ist vorgesehen, dass die Verriegelungsvorrichtung einen Riegelschieber aufweist, der das Riegelelement in einer Riegelposition zwischen den Griffmitnehmer und den Mehrkantmitnehmer platziert und den Griff in der ersten Griffposition hält.

Das Vorsehen von Verriegelungsvorrichtungen hat den Vorteil, dass, neben den zwei Griffpositionen, die Betätigung des Beschlags durch unbefugte von innen für den Fall des Riegelschiebers weiterhin erschwert und für den Fall des Schlosses weitestgehend verhindert werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine teilgeschnittene, perspektivische, schematische Ansicht einer Ausführungsform eines Beschlags beispielsweise für ein Türblatt, einen Fensterflügel, oder dergleichen;
- Fig. 2: eine perspektivische, schematische Darstellung einer Ausführungsform eines Koppelelements für einen Beschlag;
- Fig. 3: eine weitere perspektivische, schematische Darstellung einer Ausführungsform eines Koppelelements für einen Beschlag;
- Fig. 4 a) - d): perspektivische und teilweise geschnittene, schematische Darstellungen einer Ausführungsform eines Beschlags in einer Sperrstellung;
- Fig. 5 a) - d): perspektivische und teilweise geschnittene, schematische Darstellungen einer Ausführungsform eines Beschlags in einer Freigabestellung;
- Fig. 6: eine perspektivische, schematische Explosionsdarstellung einer Ausführungsform eines Anschlagkörpers mit einem Griffmitnehmer;
- Fig. 7: eine perspektivische, schematische Darstellung einer weiteren Ausführungsform eines Anschlagkörpers mit einem Griffmitnehmer;
- Fig. 8: eine geschnittene, schematische Darstellung einer Ausführungsform eines Beschlags mit einem Schloss;
- Fig. 9: eine geschnittene, schematische Darstellung einer Ausführungsform eines Beschlags mit einem Riegelschieber;
- Fig. 10: eine geschnittene, perspektivische, schematische Darstellung einer Ausführungsform eines Beschlags;
- Fig. 11: eine teilweise geschnittene, perspektivische, schematische Darstellung einer Ausführungsform eines Beschlags mit einem Koppelelement und einer Verriegelungsvorrichtung;
- Fig. 12: eine geschnittene, schematische Darstellung einer Ausführungsform eines Beschlags mit einem Koppelelement und einer Verriegelungsvorrichtung;
- Fig. 13: eine perspektivische, schematische Darstellung einer Ausführungsform eines Koppelelements für einen Beschlag und
- Fig. 14: eine perspektivische, schematische Darstellung einer Ausführungsform eines Koppelelements für einen Beschlag.

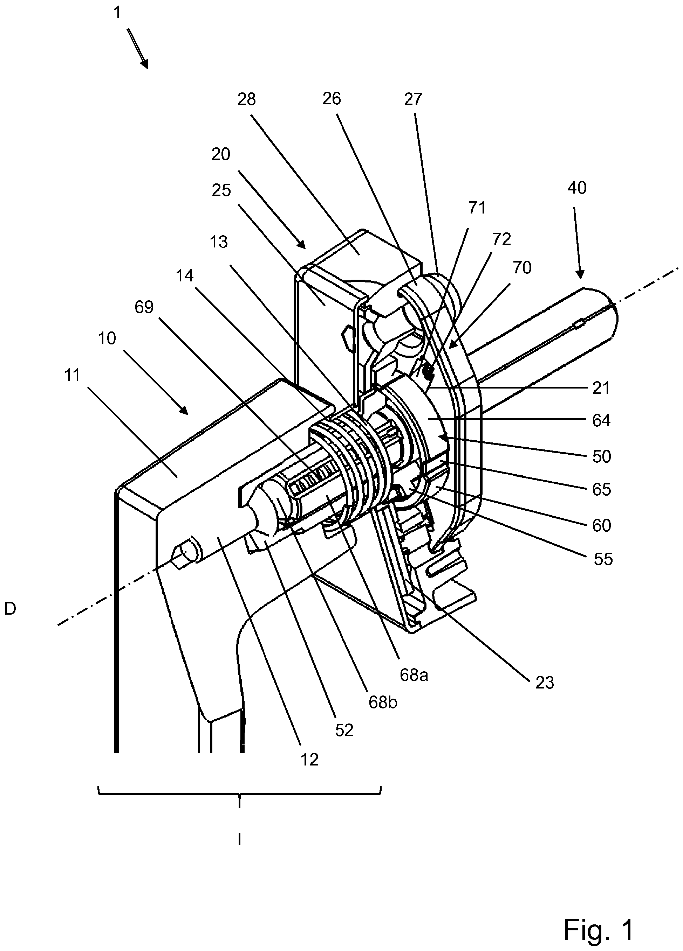

**Fig. 1** zeigt eine teilgeschnittene, perspektivische, schematische Ansicht einer Ausführungsform eines Beschlags 1 beispielsweise für ein Türblatt, einen Fensterflügel, oder dergleichen. Die Elemente des Beschlags 1 sind entlang einer Drehachse D angeordnet, durch die eine axiale Richtung definiert wird. Eine radiale Richtung verläuft senkrecht zu der axialen Richtung, also senkrecht zur Drehachse D.

Ein Griff weist einen Griffhals 11 in dem ein Griffmitnehmer 53 drehfest und axialfest aufgenommen ist. In einen Aufnahmeraum 56 des Griffmitnehmers 53 ist ein Mehrkantmitnehmer 60 angeordnet, der einen Mehrkant 40 aufnimmt. Der Mehrkant 40 durchragt einen Anschlagkörper 20 und ist mit einer nicht dargestellten Mechanik verbunden, die einen Riegelmechanismus eines Fensters oder einer Tür betätigt.

Der Mehrkantmitnehmer 60 weist einen zweiten Flanschabschnitt 64 auf, der in axialer Richtung innerhalb des Anschlagkörpers 20 griffseitig vor einem Bodeneinsatz 26 des Anschlagkörpers 20 angeordnet ist. Der Mehrkantmitnehmer 60 weist weiterhin einen ersten Flanschabschnitt 62 auf (In Fig. 1 nicht sichtbar), der in den Bodeneinsatz 26 hineinragt.

Der Mehrkantmitnehmer 60 weist außerdem einen Halsabschnitt 68a auf, der griffseitig durch einen Abschluss 68b begrenzt ist. Innerhalb des Halsabschnitts 68a ist eine Feder 69 angeordnet, die den Mehrkant 40 in Richtung des Anschlagkörpers 20 vorspannt. Dies ist insbesondere dann von Vorteil, wenn die Einbautiefe des Mehrkants 40 nicht bekannt ist oder an eine durch das Türblatt oder den Fensterflügel bedingte Einbautiefe angepasst werden muss.

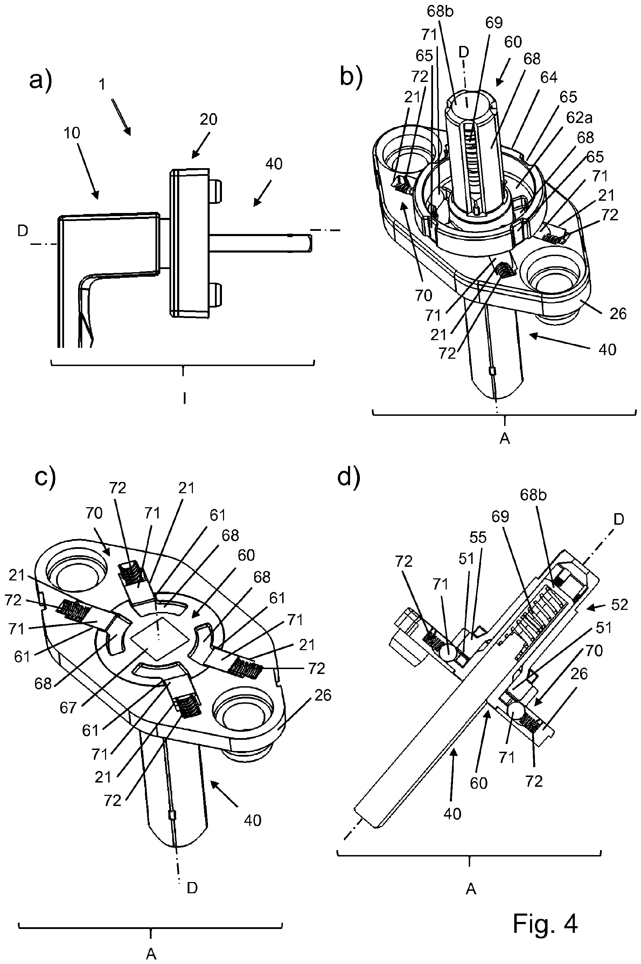

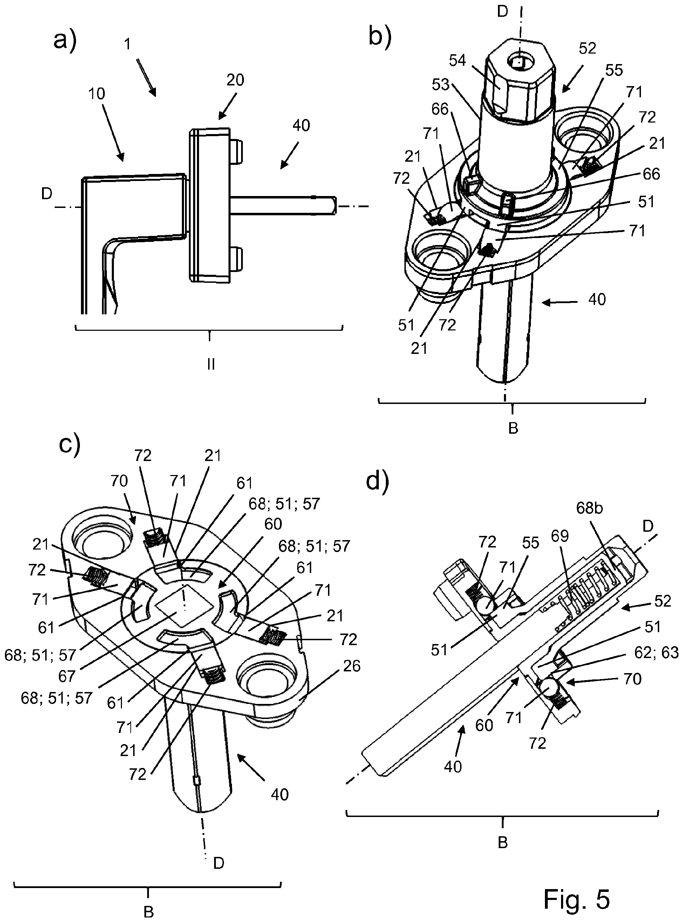

Der Bodeneinsatz 26 des Anschlagkörpers 20 weist weiterhin Ausnehmungen 21 für Sperrelemente 71 und Federn 72 einer Sperrvorrichtung 70 auf. Die Sperrelemente 71 sind mit dem ersten Flanschabschnitt 62 des Mehrkantmitnehmers 60 in Eingriff bringbar. Die Funktion der Sperrvorrichtung 70 wird nachstehend anhand der Figuren 4 und 5 erläutert.

In dem Bodeneinsatz 26 sind weiterhin Nocken 27 angebracht, die mit entsprechenden Ausnehmungen in dem Fenster oder in der Tür, in Eingriff bringbar sind. Der Bodeneinsatz 26 wird mittels Fixiermitteln (nicht dargestellt) gegen einen Grundkörper 28 des Anschlagkörpers 20 verspannt.

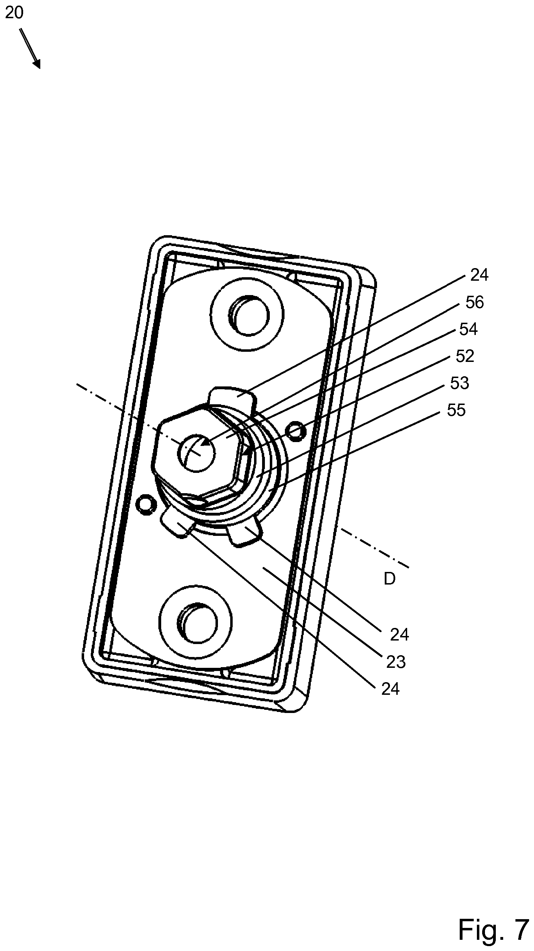

Zwischen dem Grundkörper 28 und der Abdeckplatte 25 ist eine Verstärkung 23 angeordnet, deren Funktion nachstehend anhand der Figur 7 erläutert wird.

Der Griffmitnehmer 52 und der Mehrkantmitnehmer 60 bilden gemeinsam das Koppelelement 50, wobei durch das Koppelelement 50 eine Drehmomentübertragung zwischen dem Griff 10 und dem Mehrkant 40 herstellbar ist.

Der Griffmitnehmer 52 und der Mehrkantmitnehmer 60 sind gegeneinander entlang der Drehachse D axial verschiebbar, wobei der Griff 10 hierbei in einer ersten Griffposition I und in eine zweite Griffposition II (nicht dargestellt) bringbar ist. In der ersten Griffposition I weist der Griff 10 in diesem Ausführungsbeispiel in der axialen Richtung einen Abstand zu dem Anschlagkörper 20 auf, der größer ist, als in der zweiten Griffposition II (nicht dargestellt).

Der Griff 10 ist, wenn das Fenster oder die Tür geschlossen ist, in der ersten Griffposition I. Die Rückstellfeder 13, die auf einer Außenseite des Griffmitnehmers 52 angeordnet ist, und in einen Aufnahmebereich 14 des Griffes eingreift, spannt den Griff 10 gegen den Anschlagkörper 20 vor, sodass der Griff 10 in die erste Griffposition I gedrückt wird. Gleichzeitig liegt die Rückstellfeder 13 gegen eine Abdeckplatte 25 des Aufnahmekörpers an, wobei die Abdeckplatte hierbei durch die Vorspannung der Rückstellfeder 13 gegen den Anschlagkörper 20, insbesondere gegen den Grundkörper 28 des Anschlagkörpers 20, gedrückt wird.

Zur Fixierung des Griffmitnehmers 52 in dem Griffhals 11 ist ein Befestigungsmittel 12 vorgesehen, das in diesem Ausführungsbeispiel eine Schraube ist, die durch einen griffseitigen Mehrkantbereich 54 des Griffmitnehmers 52 durchragt und in den Griffhals 11 des Griffs 10 einragt. Alternativ kann die Befestigung des Griffmitnehmers 52 in dem Griff auch durch eine stoffschlüssige Verbindung, beispielsweise durch Verklebung erfolgen.

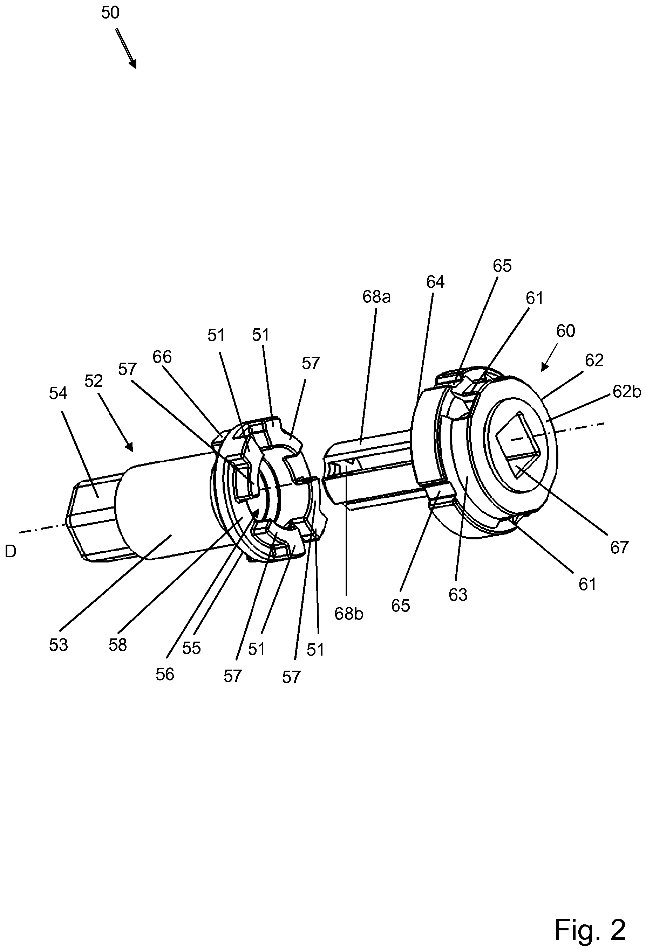

**Fig. 2** zeigt eine perspektivische, schematische Darstellung einer Ausführungsform eines Koppelelements 50 für einen Beschlag 1 mit Detaildarstellungen des Griffmitnehmers 52 und des Mehrkantmitnehmers 60.

Der Griffmitnehmer 52 ist, wie oben beschrieben, in den Griffhals 11 des Griffs 10 einsetzbar und dort mittels eines Befestigungsmittels 12 drehfest befestigbar. Hierfür weist der Griffmitnehmer 52 an seinem griffseitigen Ende zusätzlich einen Mehrkantbereich 54 auf. Der Mehrkantbereich 54 kann in eine entsprechende Ausnehmung in dem Griff eingreifen, sodass eine Rotation des Griffs um die Drehachse D verhindert wird.

Weiterhin ist der Griffmitnehmer 52 mit einem Halsabschnitt 53 versehen, der eine im Wesentlichen zylindrische Form hat. In Richtung des Mehrkantmitnehmers 60 schließt sich dieser Halsabschnitt 53 an den Mehrkantbereich 54 an. Der Halsabschnitt 53 ist rohrförmig und weist einen Aufnahmeraum 56 auf, in den beispielsweise der Mehrkantmitnehmer 60 zumindest teilweise aufnehmbar ist.

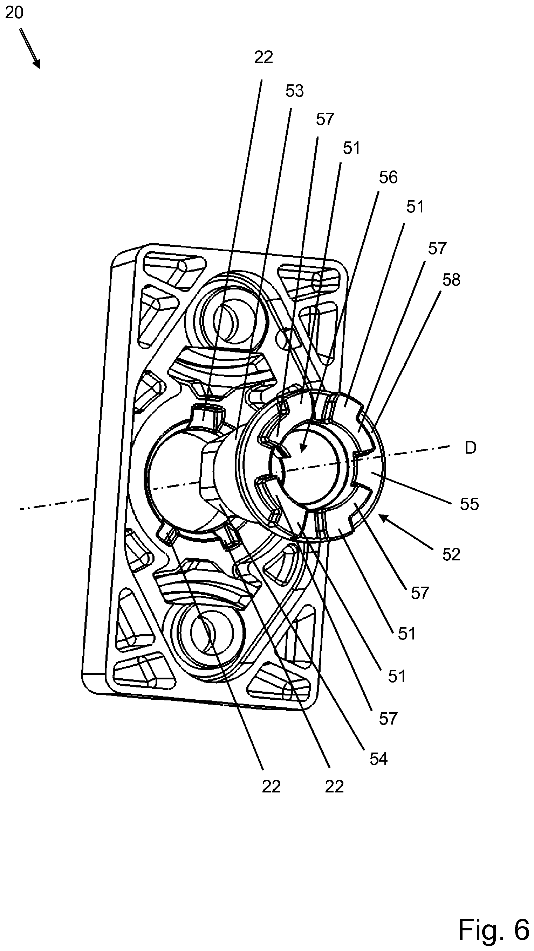

An einem dem Mehrkantmitnehmer 60 zugewandten Ende des Griffmitnehmers 52 ist ein Flanschabschnitt 55 angeordnet, wobei der Flanschanschnitt 55 durch einen Flansch gebildet wird und sich in einer radialen Richtung, senkrecht zu der Drehachse D erstreckt. Griffseitig sind auf dem Flanschabschnitt 55 des Griffmitnehmers 52 Positionierstege 66 angeordnet, die, wie später anhand der Figuren 6 und 7 erläutert wird, mit in dem Grundkörper 28 vorhandenen Positioniertaschen 22 in Eingriff bringbar sind.

Auf der dem Mehrkantmitnehmer 60 zugewandten Seite des Griffmitnehmers 52 sind Betätigungselemente 51 und Eingriffselemente 57 angeordnet. Insbesondere sind jeweils vier Eingriffselemente 57, die sich entlang des Umfangs des Flanschabschnitts 55 erstrecken und durch Abstände entlang des Umfangs voneinander beabstandet sind, an dem Flanschabschnitt 55 angeordnet.

Die Eingriffselemente 57 erstrecken sich von einer Innenseite des Flanschabschnitts 55, die durch den Aufnahmeraum 56 gebildet wird, radial nach außen, jedoch erstrecken sich die Eingriffselemente 57 nicht über den gesamten Radius des Flanschabschnitts 55.

Die Betätigungselemente 51 sind an in Umfangsrichtung liegenden Enden der Eingriffselemente 57 angeordnet und erstrecken sich jeweils bis zu einem radial äußeren Ende des Flanschabschnitts 55.

Die Betätigungselemente 51 sind einstückig mit den Eingriffselementen 55 ausgebildet und erstrecken sich in Umfangsrichtung des Flanschabschnitts 55 über einen kleineren Bereich, als die Eingriffselemente 51.

Der Mehrkantmitnehmer 60 weist ein an einem dem Griffmitnehmer 52 zugewandten Ende einen Abschluss 68b auf, an den sich in die Richtung des dem Griffmitnehmer abgewandten Endes des Mehrkantmitnehmers 60 ein Halsabschnitt 68a, ein erster Flanschabschnitt 62 und ein zweiter Flanschabschnitt 64 anschließen. Eine Stirnseite 62b schließt den Mehrkantmitnehmer 60 an dem dem Griffmitnehmer 52 gegenüberliegenden Ende ab.

Der Halsabschnitt 68a des Mehrkantmitnehmers ist im Wesentlichen zylindrisch ausgebildet und innen hohl, sodass innerhalb des Halsabschnitts 68a und innerhalb des ersten Flanschabschnitts 62 und des zweiten Flanschabschnitts 64 eine Mehrkantaufnahme 67 ausgebildet ist.

Der Halsabschnitt 68a ist weiterhin parallel zu der Drehachse D in seinem Außenumfang viermal geschlitzt. Dies ist insbesondere dann von Vorteil, wenn der Mehrkant 40 als Vierkant ausgebildet ist. Durch die Schlitzung des Außenumfangs des Halsabschnitts 68a können die Kanten in diesen eingreifen. Hierdurch ergibt sich eine Platzersparnis und eine verbesserte Drehmomentübertragung zwischen dem Mehrkantmitnehmer 60 und dem Mehrkant 40.

In dem zweiten Flanschabschnitt 64 sind entlang dessen Außenumfangs Rastmulden 65 angeordnet, deren Funktion später erläutert wird. Der erste Flanschabschnitt 62 weist Sperrausnehmungen 61 auf, die derart angeordnet und dimensioniert sind, dass die Betätigungselemente 51 formschlüssig mit den Sperrausnehmungen 61 in Eingriff bringbar sind.

In dem Ausführungsbeispiel komplettieren die radialen Außenkanten der Betätigungselemente 51 des Griffmitnehmers 52 die Umfangsfläche 63 des ersten Flanschabschnitts 62 des Mehrkantmitnehmers 60, wenn der Flanschabschnitt 55 des Griffmitnehmers 52 in den ersten Flanschabschnitt 62 des Mehrkantmitnehmers 60 eingeschoben wird.

Der Flanschabschnitt 55 des Griffmitnehmers 52 weist einen Außendurchmesser auf, der kleiner oder gleich dem in dem ersten Flanschabschnitt 62 des Mehrkantmitnehmers 60 zur Verfügung stehenden Innendurchmessers ist.

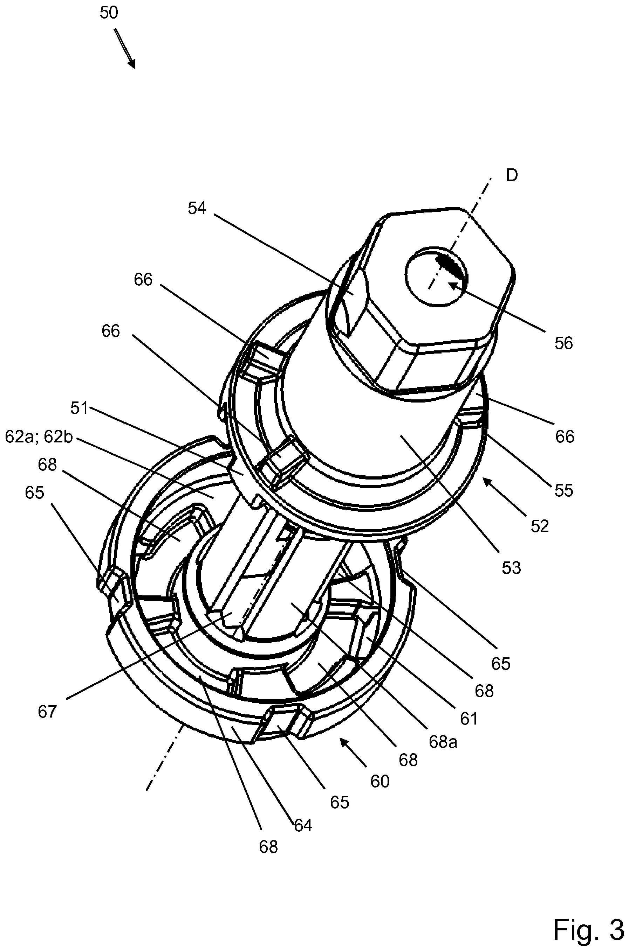

**Fig. 3** zeigt eine perspektivische, schematische Darstellung einer weiteren Ausführungsform eines Koppelelements 50 für einen Beschlag 1, wobei wie in Fig. 2 der Griffmitnehmer 52 und der Mehrkantmitnehmer 60 dargestellt sind.

Der Mehrkantbereich 54 des Griffmitnehmers 52 weist eine Durchführung für das Befestigungsmittel 12 auf.

Die auf der griffseitigen Fläche des Flanschabschnitts 55 des Griffmitnehmers 52 angeordneten Positionierstege 66 sind in Fig. 3 gut zu erkennen. Auf dem Flanschabschnitt 55 sind drei Positionierstege 66 angeordnet, die sich in einer Y-artigen Konfiguration von dem radial äußeren Randbereich des Flanschabschnitts 55 und bis zum Halsabschnitt 53 des Griffmitnehmers 52 erstrecken.

Der Mehrkantmitnehmer 60 weist in dem ersten Flanschabschnitt 62 eine griffseitig ausgerichtete Stirnfläche 62a der dem Anschlagkörper 20 zugewandten Stirnseite 62b auf, in der Ausnehmungen 68 angeordnet sind.

Die Ausnehmungen 68 sind mit den Eingriffselementen 57 und den Betätigungselementen 51 formschlüssig in Eingriff bringbar. Die Ausnehmungen weisen die Negativform der oben beschriebenen Eingriffselemente 57 und Betätigungselemente 51 auf.

Im Bereich, in dem die Betätigungselemente 51 des Griffmitnehmers 52 mit dem ersten Flanschabschnitt 62 des Mehrkantmitnehmers 60 in Eingriff kommen, weist der erste Flanschabschnitt 62 in dessen Umfangsfläche 63 jeweils eine Sperrausnehmung 61 auf.

Bei einem Aufschieben des Griffmitnehmers 52 auf den Halsabschnitt 68a des Mehrkantmitnehmers 60, sodass der Halsabschnitt 68a des Mehrkantmitnehmers 60 in den Aufnahmeraum 56 des Griffmitnehmers 52 eingeschoben wird, kommen die Eingriffselemente 57 mit den Ausnehmungen 68 in Eingriff. Zudem kommen die Betätigungselemente 51 mit den Ausnehmungen 68 und den Sperrausnehmungen 61 in Eingriff und der Flanschabschnitt 55 des Griffmitnehmers 52 kommt mit dem Flanschabschnitt 55 des Mehrkantmitnehmers in Eingriff.

In der Eingriffsposition, die in der zweiten Griffposition II (in Fig. 3 nicht dargestellt) vorliegt, ist der Griffmitnehmer 52 mit dem Mehrkantmitnehmer 60 drehfest verbunden. Es liegt eine Koppelung vor.

Das Koppelelement 50 koppelt in diesem Zustand den Griff 10 an den Mehrkant 40. Ebenfalls sind in diesem Zustand die Sperrausnehmungen 61 komplettiert, sodass die Umfangsfläche 63 des ersten Flanschabschnitts 62 weitestgehend durchgängig ist.

**Fig. 4 a) - d)** zeigen perspektivische und teilweise geschnittene, schematische Darstellungen einer Ausführungsform 50 eines Beschlags 1 in einer Sperrstellung A, wobei der Griff 10 in der ersten Griffposition I ist.

**Fig. 4 a)** zeigt eine Seitenansicht des Beschlags mit dem Griff 10, dem Anschlagkörper 20 und dem Mehrkant 40 in der ersten Griffposition I, wobei der Griff 10 entlang der Drehachse D in dieser ersten Griffposition I einen Abstand zu dem Anschlagkörper 20 aufweist, der größer ist, als der Abstand in der zweiten Griffposition II (vgl. Fig. 5 a).

**Fig. 4 b)** zeigt eine perspektivische, teilweise Darstellung des Beschlags mit dem Mehrkant 40, dem Bodeneinsatz 26 des Anschlagkörpers 20, der Sperrvorrichtung 70 und mit dem Mehrkantmitnehmer 60.

In der ersten Griffposition I ist der Griffmitnehmer 52 mit dem Mehrkantmitnehmer 60 außer Eingriff, sodass der Griff 10 mit dem Mehrkant 40 nicht gekoppelt ist. Daher ist in Fig. 4 b) und c) der Mehrkantmitnehmer 52 nicht dargestellt.

Die Sperrvorrichtung 70 ist in der Sperrstellung A. Hierbei befinden sich die in den Ausnehmungen 21 geführten Sperrelemente 71 der Sperrvorrichtung 70 durch ihre Vorspannung mittels der Federn 72 mit den Sperrausnehmungen 61 des ersten Flanschabschnitts 62 des Mehrkantmitnehmers 60 in Eingriff.

Die Sperrelemente 71 sind als Walzen ausgebildet, die durch die Begrenzung der Ausnehmungen 21 geführt werden. Eine alternative Ausgestaltung der Sperrelemente 71, beispielsweise als Kugeln oder Bolzen ist ebenfalls möglich.

Durch den Eingriff der Sperrelemente 71 mit dem ersten Flanschabschnitt 62 des Mehrkantmitnehmers 60 ist der erste Flanschabschnitt 62 drehfest mit dem Anschlagkörper 20 und somit um die Drehachse D drehfest verbunden.

Der in der Mehrkantaufnahme 60 aufgenommene Mehrkant 40 ist somit ebenfalls in der Sperrstellung A und in der ersten Griffposition I drehfest gelagert. Der Mehrkant 40 kann dennoch axialverschieblich in dem Mehrkantmitnehmer 60 gelagert sein, wenn beispielsweise in der Mehrkantaufnahme 67 zwischen dem Mehrkant 40 und dem Abschluss 68b ein Spalt vorhanden ist oder eine Feder 69 angeordnet ist.

Der zweite Flanschabschnitt 64 mit den Rastmulden 65, die in dessen Umfang angeordnet sind, liegt in der ersten Griffposition I auf dem Bodeneinsatz 26.

**Fig. 4 c)** zeigt einen Schnitt entlang einer senkrecht zu der Drehachse D verlaufenden Schnittebene durch den Bodeneinsatz 26, die Sperrvorrichtung 70, den Mehrkantmitnehmer 60 im Bereich des ersten Flanschabschnitts 62 und den Mehrkant 40, der in die Mehrkantaufnahme 67 des Mehrkantmitnehmers 60 eingesetzt ist. Ferner befinden sich die Betätigungselemente 51 mit den Ausnehmungen 68 und Sperrausnehmungen 61 außer Eingriff, sodass die Ausnehmungen 68 und die Sperrausnehmungen 61 in der Sperrstellung A nur durch den Eingriff der Sperrelemente 71 teilweise gefüllt sind.

Außerdem ist deutlich erkennbar, dass in der Sperrstellung A die Sperrelemente 71 der Sperrvorrichtung 70 mit den Sperrausnehmungen 61 des Mehrkantmitnehmers 60 in Eingriff stehen. Die Federbelastung der Sperrelemente 71 durch die Federn 72 sorgt dafür, dass die Sperrelemente 71 in den Ausnehmungen 21 des Bodeneinsatzes 78 in radialer Richtung senkrecht zur Drehachse D nach innen, also in Richtung des Mehrkants 40 vorgespannt sind.

**Fig. 4 d)** zeigt einen senkrechten Schnitt durch den teilweise dargestellten Beschlag 1. Hier ist der Griffmitnehmer 52 gemeinsam mit dem Mehrkantmitnehmer 60 in der Sperrstellung A der Sperrvorrichtung 70 dargestellt.

In Fig. 4 d) ist ebenfalls deutlich erkennbar, dass Sperrelemente 71 der Sperrvorrichtung 70 mit den Sperrausnehmungen 61 des Mehrkantmitnehmers 60 in Eingriff stehen. In der ersten Griffposition befindet sich der Griffmitnehmer in einer Ebene oberhalb der Sperrvorrichtung, sodass die Betätigungselemente 51 außerhalb eines Wirkbereichs der Sperrvorrichtung liegen.

**Fig. 5 a) - d)** zeigen perspektivische und teilweise geschnittene, schematische Darstellungen einer Ausführungsform eines Beschlags 1 in einer Freigabestellung B.

**Fig. 5 a)** zeigt eine Seitenansicht des Beschlags mit dem Griff 10, dem Anschlagkörper 20 und dem Mehrkant 40 in der zweiten Griffposition II, wobei der Griff 10 entlang der Drehachse D in dieser zweiten Griffposition II einen Abstand zu dem Anschlagkörper 20 aufweist, der kleiner ist, als der Abstand in der ersten Griffposition I (vgl. Fig. 4 a).

**Fig. 5 b)** zeigt eine perspektivische, teilweise Darstellung des Beschlags mit dem Mehrkant 40, dem Bodeneinsatz 26 des Anschlagkörpers 20, der Sperrvorrichtung 70, mit dem Mehrkantmitnehmer 60 und dem Griffmitnehmer 52. In der hier dargestellten zweiten Griffposition II ist der Griffmitnehmer 52 mit dem Mehrkantmitnehmer 60 in Eingriff.

Die Sperrvorrichtung 70 ist in der Freigabestellung B. Hierbei befinden sich die in den Ausnehmungen 21 geführten Sperrelemente 71 der Sperrvorrichtung 70 mit den Sperrausnehmungen 61 des Mehrkantmitnehmers 60 außer Eingriff.

Die Sperrelemente 71 der Sperrvorrichtung 70 werden durch die Betätigungselemente 51 des Griffmitnehmers gegen die Spannung der Federn 72 in die Ausnehmungen 21 des Grundkörpers 28 gedrückt, bis die Sperrelemente 71 mit den Sperrausnehmungen 61 außer Eingriff sind.

In der Freigabestellung B ist der Mehrkantmitnehmer durch die Sperrvorrichtung folglich nicht drehfest blockiert, wodurch zwischen dem Griffmitnehmer 52 und dem mit dem Griffmitnehmer 52 drehfest verbundenen Griff 10 und dem Mehrkant 40 ein Drehmoment übertragbar ist.

Das Drehmoment wird insbesondere über die Kopplung die durch das Koppelelement 50 hergestellt ist, übertragen. Die Kopplung besteht insbesondere zwischen dem Griffmitnehmer 52 und dem Mehrkantmitnehmer 60.

**Fig. 5 c)** zeigt einen Schnitt entlang einer senkrecht zu der Drehachse D verlaufenden Schnittebene durch den Bodeneinsatz 26, die Sperrvorrichtung 70, den Mehrkantmitnehmer 60 im Bereich des ersten Flanschabschnitts 62, den Griffmitnehmer in Bereich des Flanschabschnitts und insbesondere im Bereich der Betätigungselemente 51 und den Mehrkant 40, der in die Mehrkantaufnahme 67 des Mehrkantmitnehmers 60 eingesetzt ist.

Hier ist deutlich erkennbar, dass die Betätigungselemente 51 die Sperrelemente 71 außer Eingriff mit den Sperrausnehmungen 61 und den Ausnehmungen 68 halten. Ferner sind die Eingriffselemente 57 mit den Ausnehmungen 68 in Eingriff, sodass eine Kopplung zwischen dem Griffmitnehmer 52 und dem Mehrkantmitnehmer 60 insbesondere für eine Rotation um die Drehachse D besteht. Die Kopplung sorgt dafür, dass zwischen dem Mehrkantmitnehmer 52 und dem Griffmitnehmer 60 ein Drehmoment übertragbar ist, wobei das Koppelelement 50 in der zweiten Griffposition II und in der Freigabestellung B der Sperrvorrichtung 70 dadurch so eingerichtet ist, dass der Mehrkant 40 durch den Griff 10 betätigbar ist.

**Fig. 5 d)** zeigt einen senkrechten Schnitt durch den teilweise dargestellten Beschlag 1. Hier ist der Griffmitnehmer 52 gemeinsam mit dem Mehrkantmitnehmer 60 und dem Griffmitnehmer in der Freigabestellung B der Sperrvorrichtung 70 dargestellt.

In Fig. 5 d) ist ebenfalls deutlich erkennbar, dass Sperrelemente 71 der Sperrvorrichtung 70 mit den Sperrausnehmungen 61 des Mehrkantmitnehmers 60 außer Eingriff stehen. Dies wird dadurch erreicht, dass in der Griffmitnehmer 52 über die axiale Betätigung des Griffs 10 entlang der Drehachse D in die zweite Griffposition II überführt wird.

In der zweiten Griffposition II befindet sich der Griffmitnehmer 52 mit dem Mehrkantmitnehmer zumindest über die Betätigungselemente 51 in Eingriff, wobei die Betätigungselemente 51 die Umfangsfläche 63 des ersten Flanschabschnitts 62 des Mehrkantmitnehmers komplettieren. Die Sperrelemente 71 befinden sich mit dem Mehrkantmitnehmer außer Eingriff, wobei die Sperrelemente 71 in den Ausnehmungen 21 des Bodeneinsatzes 26 liegen und aufgrund der durch die Federn 72 hervorgerufene Vorspannung gegen die mittels der Betätigungselemente 51 komplettierte Umfangsfläche 63 des ersten Flanschabschnitts 62 gedrückt werden.

**Fig. 6** zeigt eine perspektivische, schematische Explosionsdarstellung einer Ausführungsform eines Anschlagkörpers 20 mit einem Griffmitnehmer 53.

In dieser Darstellung sind die auf dem dem Anschlagkörper zugewandten Ende angeordneten Betätigungselemente 51 und Eingriffselemente 57, die in den vorstehenden Ausführungen bereits beschrieben wurden, gut zu erkennen.

Ferner ist der Grundkörper 28 des Anschlagkörpers 20 dargestellt. Der Anschlagkörper 20 weist Positioniertaschen 22 in dem Grundkörper 28 auf, die mit Positionierstegen 66 des Griffmitnehmers 52 in der ersten Griffposition I in Eingriff bringbar sind.

In der zweiten Griffposition II sind die Positionierstege 66 mit den Positioniertaschen 22 außer Eingriff.

Die Positioniertaschen 22 weisen dieselbe Y-artige Konfiguration zueinander auf, wie die Positionierstege 66 auf der dem Griff 10 zugewandten Seite des Flanschabschnitts 55 des Griffmitnehmers 52.

**Fig. 7** zeigt eine perspektivische, schematische Darstellung einer weiteren Ausführungsform eines Anschlagkörpers 20 mit einem Griffmitnehmer 53.

In dieser Darstellung ist die Abdeckplatte 25 des Anschlagkörpers 20 nicht dargestellt, sodass die unter der Abdeckplatte in dem Anschlagkörper liegende Verstärkung 23 sichtbar ist. Die Verstärkung 23 weist Aussparungen auf, die im Bereich der Positioniertaschen 22 liegen. Die Positioniertaschen 22 haben ihre Öffnungen in Richtung des Flanschabschnitts 55 des Griffmitnehmers 52. Der Griffmitnehmer 52 ist durch eine zentrale Ausnehmung in dem Anschlagkörper 20 geführt und durchragt den Anschlagkörper 20 griffseitig mit dem Halsabschnitt 53.

Die Aussparungen 24 in der Verstärkung 23 stabilisieren den Grundkörper 28, sodass der Griffmitnehmer 52 mit den Positionierstegen 66 in einer ersten Griffposition I des Griffes 10 drehfest und durch die Verstärkung auch widerstandsfähig gegen eine Rotation um die Drehachse D festgelegt ist. Die bei einer versuchten Betätigung des Griffs in der ersten Griffposition durch eine Rotation um die Drehachse D werden die Kräfte, die auf die Positionierstege 66 und auf die Positioniertaschen 22 wirken, von der Verstärkung 23 aufgenommen und gelichmäßig an den umgebenden Grundkörper 28 abgegeben und schließlich über den gansamten Anschlagskörper 20 mit dem Bodeneinsatz 26 und den Nocken 27 abgeleitet.

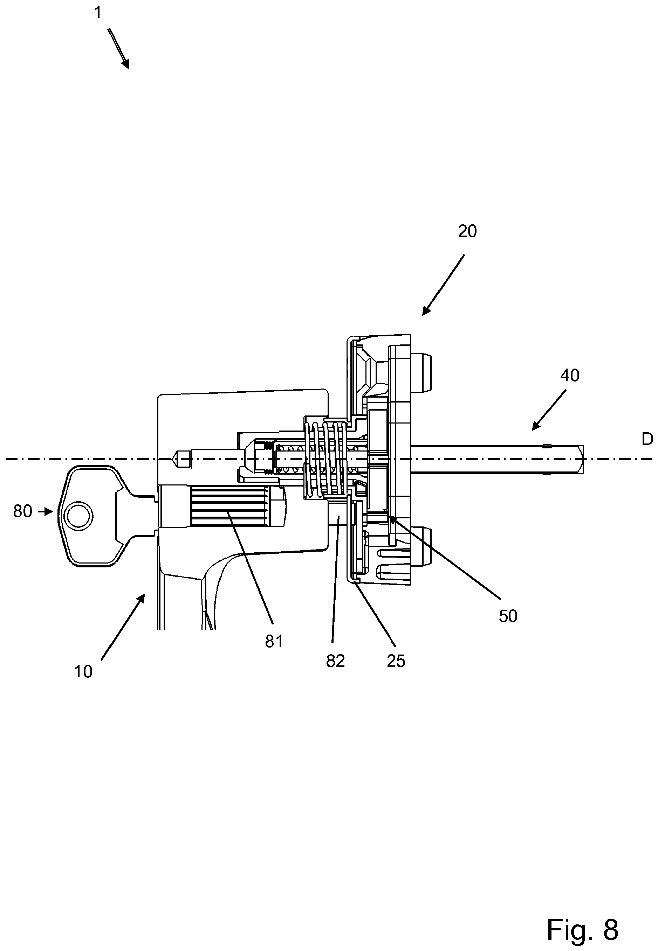

**Fig. 8** zeigt eine geschnittene, schematische Darstellung einer Ausführungsform eines Beschlags 1 mit einer Verriegelungsvorrichtung, insbesondere einem Schloss 81. Das Schloss weist hierbei einen Schließmechanismus auf, der in einer Schließstellung einen Bolzen 82 gegen die Abdeckplatte 25 des Anschlagkörpers 20 anliegen lässt, sodass eine Überführung des Griffs 10 von der ersten Griffposition I in die zweite Griffposition II verhindert wird.

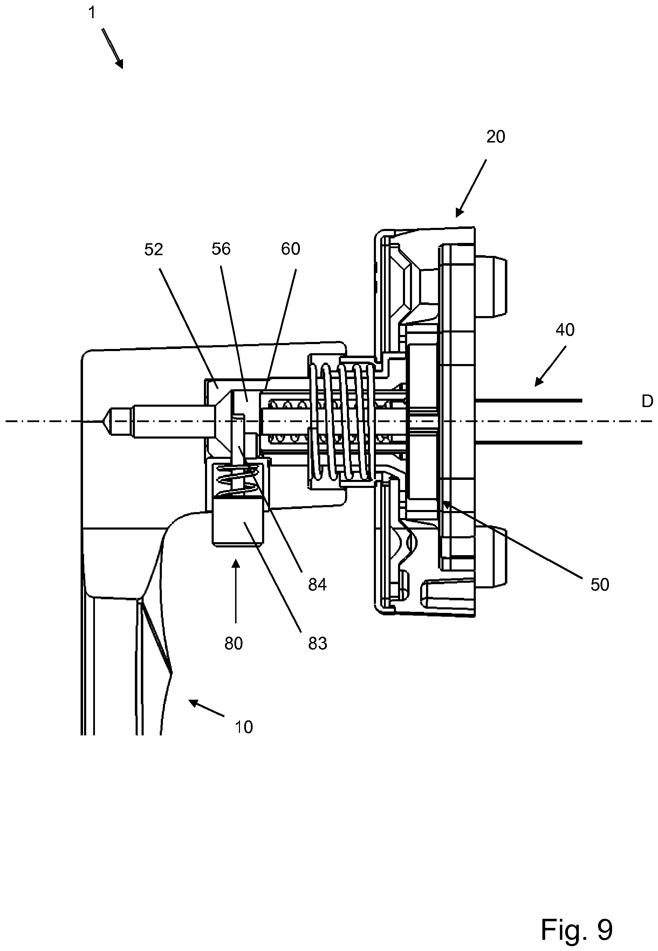

**Fig. 9** zeigt eine geschnittene, schematische Darstellung einer Ausführungsform eines Beschlags 1 mit einer Verriegelungsvorrichtung, insbesondere einem Riegelschieber 83. Durch den Riegelschieber 83 ist ein Riegel 84 betätigbar, der in den Aufnahmeraum 56 des Griffmitnehmers 52 eingreift und eine axiale Bewegung des Griffmitnehmers 52 gegenüber dem Mehrkantmitnehmer 60 oder umgekehrt blockiert. Auf diese Weise ist der Griff 10 in der ersten Griffposition I mittels der Verriegelungsvorrichtung 80 verriegelt.

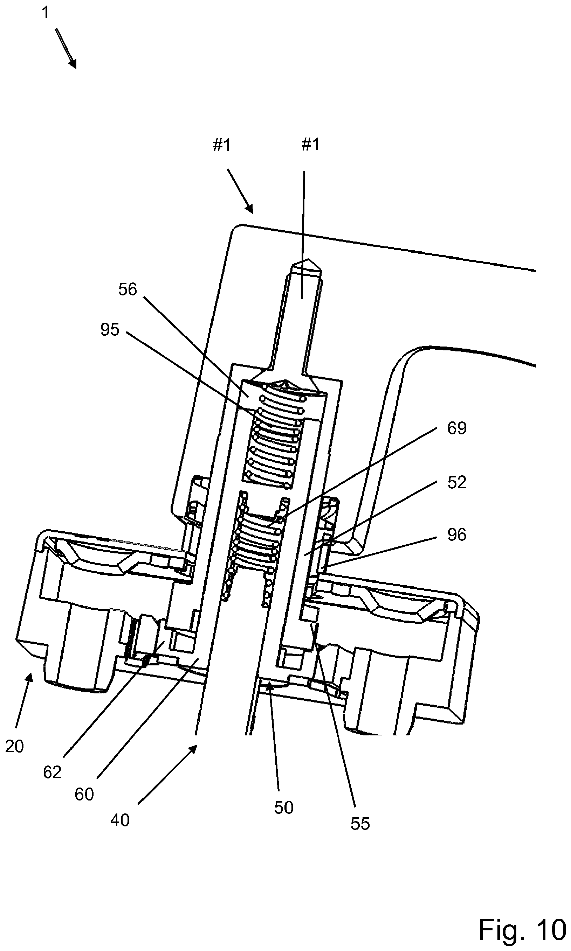

**Fig. 10** zeigt eine geschnittene, perspektivische, schematische Darstellung einer Ausführungsform eines Beschlags 1. In dieser Ausführungsform ist der Griff 10 gegenüber dem Anschlagkörper 20 zur Bewahrung der ersten Griffposition I derart vorgespannt, dass die Vorspannung über eine Innenfeder 95 und eine Außenfeder 96 erfolgt. Die Außenfeder 96 ist zwischen dem Griff 10 und der Abdeckplatte 25 des Anschlagkörpers 20 angeordnet und greift zumindest teilweise in den Griffhals 11 des Griffs 10 ein.

Der Mehrkantmitnehmer 60 ist derart ausgebildet, dass er in einem Bereich, der dem Griff zugewandt ist, eine Aussparung aufweist, in die die Innenfeder 95 teilweise einliegt. Die Innenfeder 95 ist in dem Aufnahmeraum 56 des Griffmitnehmers 52 angeordnet und liegt an der griffseitigen Begrenzung des Griffmitnehmers 52 und/oder an dem Befestigungsmittel 12 an.

Durch die Innenfeder 95 und die Außenfeder 96 wird die Koppelanordnung 50 in einer axialen Richtung entlang der Drehachse D auseinandergedrückt. Dieser Vorspannung wirkt der Grundkörper 28 entgegen, gegen den der Griffmitnehmer 52 mit den Positionierstegen 66 anliegt.

Die Positionierstege 66 lassen bei einem Eingriff mit den Positioniertaschen 22 die erste Griffposition I zu, wobei die Positionierstege 66 außer Eingriff mit den Positioniertaschen 22 den Griff in der zweiten Griffposition II halten.

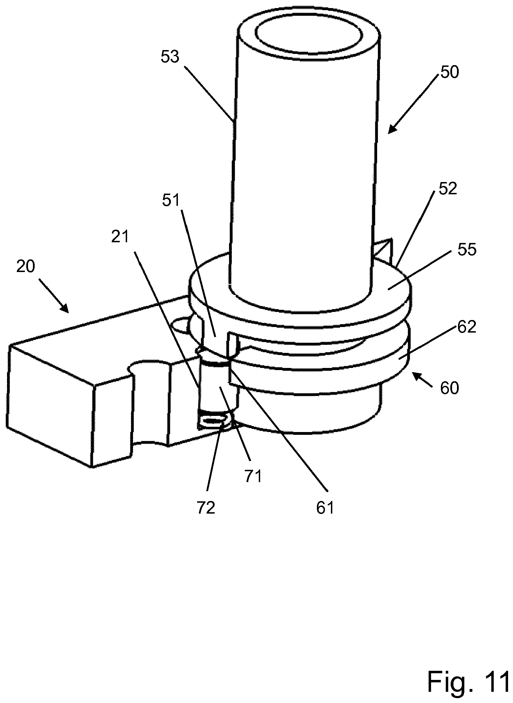

**Fig. 11** zeigt eine teilweise geschnittene, perspektivische, schematische Darstellung einer Ausführungsform eines Beschlags 1 mit einem Koppelelement 50 und einer Sperrvorrichtung 70.

Bei dieser Ausführungsform wirkt die Sperrvorrichtung in axialer Richtung. Hierbei ist das Sperrelement 71 in einer Ausnehmung 21 des Anschlagkörpers 20 durch eine Vorspannung mittels einer Feder 72 axialverschieblich gelagert.

Bei axialer Betätigung des Griffmitnehmers 52 ist dieser über das Betätigungselement 51 mit dem Mehrkantmitnehmer 60 in Eingriff bingbar, wodurch das Sperrelement 71 mit der Sperrausnehmung 61 in dem ersten Flanschabschnitt 62 des Mehrkantmitnehmers 60 außer Eingriff bringbar ist.

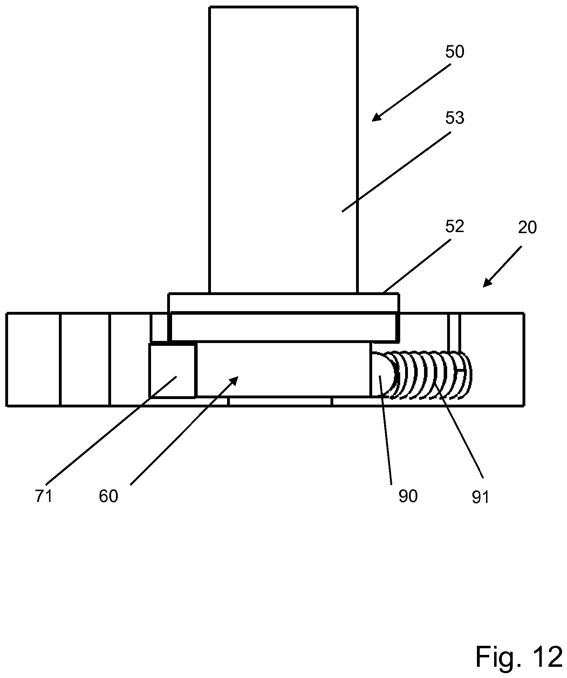

**Fig. 12** zeigt eine geschnittene, schematische Darstellung einer Ausführungsform eines Beschlags 1 mit einem Koppelelement 50 und einer Sperrvorrichtung 70, wobei die Sperrvorrichtung 70 wie oben beschrieben in eine axiale Richtung wirkt.

Das Koppelelement 50 ist in einer eingekoppelten Stellung gezeigt, was bedeutet, dass der in Fig. 12 nicht dargestellte Griff 10 in der zweiten Griffposition II ist und die Sperrvorrichtung 70 in der Freigabestellung B ist.

Fig. 12 zeigt weiterhin ein Rastelement 90 mit einer Rastelementfeder 91, das gegen den ersten Flanschabschnitt 62 vorgespannt ist. Das Rastelement 90 kann das Kopplungselement 50 in Raststellungen halten, die definierten Griffstellungen des Griffs entsprechen. Zum Überwinden der Raststellungen, d. h. das außer Eingriff bringen der Rastelemente 90 mit in Fig. 12 nicht dargestellten Rastmulden 65 muss der Benutzer einen erhöhten Aufwand zur Betätigung aufbringen, wobei das Erreichen einer Raststellung eine für den Benutzer fühlbare Rückkopplung erzeugt.

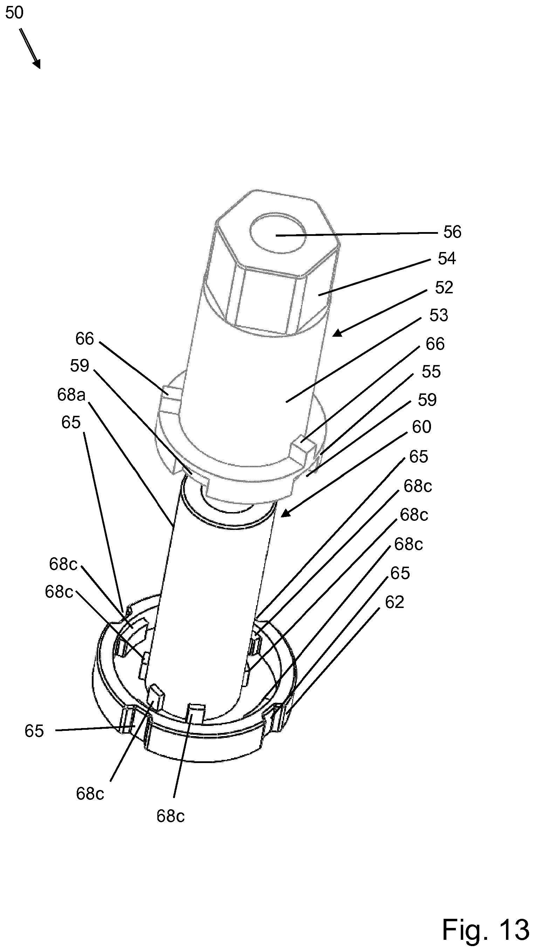

**Fig. 13** zeigt eine perspektivische, schematische Darstellung einer Ausführungsform eines Koppelelements 50 für einen Beschlag 1. Das Koppelement 50 ist derart ausgestaltet, dass der Halsabschnitt 68a des Mehrkantmitnehmers 60 und der Aufnahmeraum 56 des Griffmitnehmers 52 in einem eingebauten Zustand über eine besonders große axiale Länge in Überdeckung sind. Auf diese Weise wird die Führung des Griffs 10 in dem Beschlag 1 verbessert.

Gemäß dieser Ausführungsform ist vorgesehen, dass in dem ersten Flanschbereich 62 des Mehrkantmitnehmers 60 radial äußere Ausformungen 68c und radial innere Ausformungen 68c angeordnet sind, die mit korrespondierenden radial äußeren und radial inneren Ausnehmungen 59 des Griffmitnehmers in der zweiten Griffposition II in Eingriff bringbar sind.

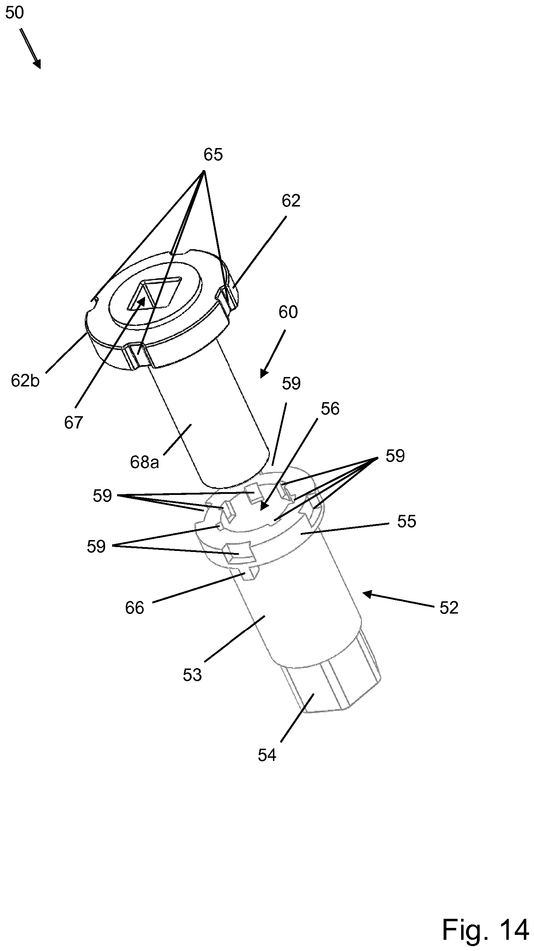

**Fig. 14** zeigt eine perspektivische, schematische Darstellung einer Ausführungsform eines Koppelelements 50 für einen Beschlag 1 in einer Ansicht von dem Anschlagkörper 20 aus gesehen. In dieser Ansicht sind die radial äußeren und radial inneren Ausnehmungen 59 des Griffmitnehmers gut erkennbar. Die Ausnehmungen sind in dem Flanschbereich 55 des Griffmitnehmers 52 angeordnet.

Die Erfindung ist nicht auf eine der vorbeschriebenen Ausführungsformen beschränkt, sondern in vielfältiger Weise abwandelbar. So kann beispielsweise das Koppelelement 50 einteilig ausgebildet sein und mit einer in dem Anschlagkörper 20 angeordneten Sperrvorrichtung 70 derart in Eingriff gebracht werden, dass das Koppelelement 50 die Sperrvorrichtung 70 mit dem Mehrkant 40 zur Erreichung der Sperrstellung A in Eingriff oder zur Erreichung der Freigabestellung B außer Eingriff bringt oder das außer Eingriff bringen zulässt.

Weiterhin kann vorgesehen sein, dass die Sperrstellung A der Sperrvorrichtung 70 dann erreicht ist, wenn der Griff 10 in der zweiten Griffposition II ist und die Freigabestellung B dann erreicht ist, wenn der Griff in der ersten Griffposition I ist.

Außerdem kann das Koppelelement 50, wenn es zweiteilig ausgebildet ist, derart ausgestaltet sein, dass der Griffmitnehmer 52 in dem Mehrkantmitnehmer 60 geführt ist.

Man erkennt, dass ein Beschlag 1, zur Betätigung einer Mechanik in einer Tür oder in einem Fenster, einen Griff 10 aufweist, der drehbar um eine Drehachse D an oder in einem Anschlagkörper 20 gelagert ist, wobei der Anschlagkörper 20 an der Tür oder dem Fenster befestigbar ist. Der Beschlag hat ferner einen Mehrkant 40 zur Betätigung der Mechanik in der Tür oder in dem Fenster, ein Koppelelement 50 zur Kopplung des Griffs 10 mit dem Mehrkant 20, sowie eine Sperrvorrichtung 70, die in einer Sperrstellung A die Betätigung des Mehrkants 40 um die Drehachse D sperrt, wobei die Sperrvorrichtung 70 durch axiale Betätigung des Griffs von einer ersten Griffposition in eine zweite Griffposition entlang der Drehachse D in eine Freigabestellung B überführbar ist. Um einen erhöhten Schutz gegen unbefugte Betätigung des Beschlags oder der mit dem Beschlag verbundenen Mechanik im Fenster oder der Tür zu gewährleisten und um einen einfach zu handhabenden und kostengünstig aufgebauten Beschlag zu erlangen, ist vorgesehen, dass in der ersten Griffposition der Griff 10 von dem Mehrkant 40 abgekoppelt ist, wobei sich die Sperrvorrichtung 70 in der Sperrstellung A befindet und, dass in der zweiten Griffposition das Koppelelement 50 den Griff 10 an dem Mehrkant 40 koppelt und die Sperrvorrichtung 70 in der Freigabestellung B hält. Mit dem Erreichen der zweiten Griffposition wird somit der Griff an den Mehrkant gekoppelt und dieser für die Betätigung der Mechanik entsperrt.

**Bezugszeichenliste**

| | | | |
|---|---|---|---|
| 1 | Beschlag | 62a | Stirnfläche |
| 10 | Griff | 62b | Stirnseite |
| 11 | Griffhals | 63 | Umfangsfläche |
| 12 | Befestigungsmittel | 64 | zweiter Flanschabschnitt |
| 13 | Rückstellfeder | 65 | Rastmulde |
| 14 | Aufnahmebereich | 66 | Positioniersteg |
| | | 67 | Mehrkantaufnahme |
| 20 | Anschlagkörper | 68 | Ausnehmung |
| 21 | Ausnehmung | 68a | Halsabschnitt |
| 22 | Positioniertasche | 68b | Abschluss |
| 23 | Verstärkung | 68c | Ausformung |
| 24 | Aussparung | 69 | Feder |
| 25 | Abdeckplatte | | |
| 26 | Bodeneinsatz | 70 | Sperrvorrichtung |
| 27 | Nocke | 71 | Sperrelement |
| 28 | Grundkörper | 72 | Feder |
| 40 | Mehrkant | 80 | Verriegelungsvorrichtung |
| | | 81 | Schließzylinder |
| 50 | Koppelelement | 82 | Bolzen |
| 51 | Betätigungselement | 83 | Riegelschieber |
| 52 | Griffmitnehmer | 84 | Riegel |
| 53 | Halsabschnitt | | |
| 54 | Mehrkantbereich | 90 | Rastelement |
| 55 | Flanschabschnitt | 91 | Rastelementfeder |
| 56 | Aufnahmeraum | 95 | Innenfeder |
| 57 | Eingriffselement | 96 | Außenfeder |
| 58 | Stirnfläche | D | Drehachse |
| 59 | Ausnehmung | A | Sperrstellung |
| 60 | Mehrkantmitnehmer | B | Freigabestellung |
| 61 | Sperrausnehmung | I | Erste Griffposition |
| 62 | erster Flanschabschnitt | II | Zweite Griffposition |

## Patentansprüche

1. Beschlag (1) zur Betätigung einer Mechanik in einer Tür oder in einem Fenster,
- mit einem Griff (10), der drehbar um eine Drehachse (D) an oder in einem Anschlagkörper (20) gelagert ist,
- wobei der Anschlagkörper (20) an der Tür oder dem Fenster befestigbar ist,
- mit einem Mehrkant (40) zur Betätigung der Mechanik in der Tür oder in dem Fenster,
- mit einem Koppelelement (50) zur Kopplung des Griffs (10) mit dem Mehrkant (20),
- und mit einer Sperrvorrichtung (70), die in einer Sperrstellung (A) die Betätigung des Mehrkants (40) um die Drehachse (D) sperrt,
- wobei die Sperrvorrichtung (70) durch axiale Betätigung des Griffs von einer ersten Griffposition (I) in eine zweite Griffposition (II) entlang der Drehachse (D) in eine Freigabestellung (B) überführbar ist,
**dadurch gekennzeichnet,**
a. **dass** in der ersten Griffposition (I) der Griff (10) von dem Mehrkant (40) abgekoppelt ist,
b. wobei sich die Sperrvorrichtung (70) in der Sperrstellung (A) befindet und,
c. **dass** in der zweiten Griffposition (II) das Koppelelement (50) den Griff (10) an den Mehrkant (40) koppelt und die Sperrvorrichtung (70) in der Freigabestellung (B) hält.

2. Beschlag nach Anspruch 1, **dadurch gekennzeichnet, dass** das Koppelelement (50) mindestens ein Betätigungselement (51) für die Sperrvorrichtung (70) aufweist.

3. Beschlag nach Anspruch 1 oder 2, **dadurch gekennzeichnet, dass** die Sperrvorrichtung (70) mindestens ein Sperrelement (71) aufweist, das separat in dem Anschlagkörper (20) angeordnet ist.

4. Beschlag nach Anspruch 3, **dadurch gekennzeichnet, dass** die Sperrelemente (71) in Bezug auf die Drehachse (D) radial oder axial bewegbar sind, wobei jedes Sperrelement (71) in Bezug auf die Drehachse (D) in axialer oder in radialer Richtung mit einer Kraft beaufschlagt ist.

5. Beschlag nach Anspruch 3 oder 4, **dadurch gekennzeichnet, dass** die Sperrelemente (71) in der Sperrstellung (A) mit dem Mehrkant (40) direkt oder indirekt in Eingriff stehen.

6. Beschlag nach einem der Ansprüche 1 bis 5, **dadurch gekennzeichnet, dass** das Koppelelement (50) zweiteilig ausgebildet ist, wobei das Koppelelement (50) einen Griffmitnehmer (52) aufweist, der drehfest mit dem Griff (10) verbunden ist und einen Mehrkantmitnehmer (60) aufweist, der drehfest mit dem Mehrkant (40) verbunden ist.

7. Beschlag nach Anspruch 6, **dadurch gekennzeichnet, dass** die Betätigungselemente (51) des Koppelelements (50) an dem Griffmitnehmer (52) ausgebildet sind.

8. Beschlag nach Anspruch 6 oder 7, **dadurch gekennzeichnet, dass** der Mehrkantmitnehmer (60) mindestens eine Sperrausnehmung (61) zur Aufnahme der Sperrelemente (71) aufweist.

9. Beschlag nach Anspruch 6 bis 8, **dadurch gekennzeichnet, dass** der Mehrkantmitnehmer (60) einen ersten Flanschabschnitt (62) aufweist.

10. Beschlag nach Anspruch 9, **dadurch gekennzeichnet, dass** die Sperrausnehmungen (61) in dem ersten Flanschabschnitt (62) angeordnet sind

11. Beschlag nach einem der Ansprüche 6 bis 10, **dadurch gekennzeichnet, dass** mindestens eine Ausnehmung (68) in einer an einer dem Griff (10) zugewandten Stirnfläche (62a) einer Stirnseite (62b) des Mehrkantmitnehmers (60) angeordnet ist.

12. Beschlag nach einem der Ansprüche 6 bis 11, **dadurch gekennzeichnet, dass** die Betätigungselemente (51) in der zweiten Griffposition (II) in die Sperrausnehmungen (61) des Mehrkantmitnehmers (60) eingreifen.

13. Beschlag nach einem der Ansprüche 6 bis 12, **dadurch gekennzeichnet, dass** der Mehrkantmitnehmer (60) griffseitig einen Halsabschnitt (68) aufweist.

14. Beschlag nach einem der Ansprüche 6 bis 13, **dadurch gekennzeichnet, dass** der Mehrkantmitnehmer (60) einen zweiten Flanschabschnitt (64) aufweist, wobei in dem zweiten Flanschabschnitt (63) oder in dem ersten Flanschabschnitt (62) umfangsseitig mindestens eine Rastmulde (65) für mindestens ein Rastelement (90) angeordnet ist.

15. Beschlag nach einem der Ansprüche 6 bis 14, **dadurch gekennzeichnet, dass** der Griffmitnehmer (52) mindestens einen Positioniersteg (66) aufweist und dass der Anschlagkörper (20) mindestens eine Positioniertasche (22) für die Positionierstege aufweist, wobei jeder Positioniersteg (66) in der ersten Griffposition (I) mit der jeweils zugeordneten Positioniertasche (22) in Eingriff bringbar ist.

## Claims

1. Fitting (1) for actuating a mechanism in a door or in a window,
- having a handle (10) mounted on or in a stop body (20) such that it can rotate about an axis of rotation (D),
- wherein the stop body (20) can be fastened to the door or the window,
- having a polygon (40) for actuating the mechanism in the door or in the window,
- having a coupling element (50) for coupling the handle (10) to the polygon (20),
- and having a blocking device (70) which blocks the actuation of the polygon (40) about the axis of rotation (D) in a blocking position (A),
- wherein the blocking device (70) can be transferred to a release position (B) by axially actuating the handle from a first handle position (I) to a second handle position (II) along the axis of rotation (D),
**characterised in that**
a. in the first handle position (I), the handle (10) is decoupled from the polygon (40),
b. wherein the blocking device (70) is in the blocking position (A), and
c. **in that** in the second handle position (II), the coupling element (50) couples the handle (10) to the polygon (40) and holds the blocking device (70) in the release position (B).

2. Fitting according to claim 1, **characterised in that** the coupling element (50) has at least one actuating element (51) for the blocking device (70).

3. Fitting according to claim 1 or 2, **characterised in that** the blocking device (70) has at least one blocking element (71) which is arranged separately in the stop body (20).

4. Fitting according to claim 3, **characterised in that** the blocking elements (71) can be moved radially or axially in relation to the axis of rotation (D), wherein a force is applied to each blocking element (71) in the radial or axial direction in relation to the axis of rotation (D).

5. Fitting according to claim 3 or 4, **characterised in that,** in the blocking position (A), the blocking elements (71) are engaged directly or indirectly with the polygon (40).

6. Fitting according to any of claims 1 to 5, **characterised in that** the coupling element (50) has a two-part design, wherein the coupling element (50) has a handle driver (52) that is connected to the handle (10) for conjoint rotation, and has a polygon driver (60) that is connected to the polygon (40) for conjoint rotation.

7. Fitting according to claim 6, **characterised in that** the actuating elements (51) of the coupling element (50) are formed on the handle driver (52).

8. Fitting according to claim 6 or 7, **characterised in that** the polygon driver (60) has at least one blocking recess (61) for receiving the blocking elements (71).

9. Fitting according to claim 6 to 8, **characterised in that** the polygon driver (60) has a first flange section (62).

10. Fitting according to claim 9, **characterised in that** the blocking recesses (61) are arranged in the first flange section (62).

11. Fitting according to any of claims 6 to 10, **characterised in that** at least one recess (68) is arranged in an end face (62a), facing the handle (10), of an end side (62b) of the polygon driver (60).

12. Fitting according to any of claims 6 to 11, **characterised in that,** in the second handle position (II), the actuating elements (51) engage in the blocking recesses (61) of the polygon driver (60).

13. Fitting according to any of claims 6 to 12, **characterised in that** the polygon driver (60) has a neck section (68) on the handle side.

14. Fitting according to any of claims 6 to 13, **characterised in that** the polygon driver (60) has a second flange section (64), wherein at least one latching depression (65) for at least one latching element (90) is arranged circumferentially in the second flange section (63) or in the first flange section (62).

15. Fitting according to any of claims 6 to 14, **characterised in that** the handle driver (52) has at least one positioning web (66) and **in that** the stop body (20) has at least one positioning pocket (22) for the positioning webs, wherein, in the first handle position (I), each positioning web (66) can be brought into engagement with the respectively associated positioning pocket (22).

## Revendications

1. Ferrure (1) destinée à actionner un mécanisme dans une porte ou une fenêtre,
- avec une poignée (10) qui est montée de façon à pouvoir tourner autour d'un axe de rotation (D) sur ou dans un corps de butée (20),
- dans laquelle le corps de butée (20) peut être fixé sur la porte ou la fenêtre,
- avec un polygone (40) servant à actionner le mécanisme dans la porte ou dans la fenêtre,
- avec un élément de couplage (50) servant à accoupler la poignée (10) avec le polygone (20),
- et avec un dispositif de blocage (70) qui dans une position de blocage (A) bloque l'actionnement du polygone (40) autour de l'axe de rotation (D),
- dans laquelle le dispositif de blocage (70) peut être amené dans une position de libération (B) par un actionnement axial de la poignée d'une première position de poignée (I) en une seconde position de poignée (II) le long de l'axe de rotation (D),
**caractérisée en ce que**
a. dans la première position de poignée (I) la poignée (10) est désaccouplée du polygone (40),
b. dans laquelle le dispositif de blocage (70) se trouve dans la position de blocage (A) et,
c. **en ce que** dans la seconde position de poignée (II) l'élément de couplage (50) accouple la poignée (10) au polygone (40) et maintient le dispositif de blocage (70) dans la position de libération (B).

2. Ferrure selon la revendication 1, **caractérisée en ce que** l'élément de couplage (50) présente au moins un élément d'actionnement (51) pour le dispositif de blocage (70).

3. Ferrure selon la revendication 1 ou 2, **caractérisée en ce que** le dispositif de blocage (70) présente au moins un élément de blocage (71) qui est disposé séparément dans le corps de butée (20).

4. Ferrure selon la revendication 3, **caractérisée en ce que** les éléments de blocage (71) sont mobiles radialement ou axialement par rapport à l'axe de rotation (D), dans laquelle chaque élément de blocage (71) est appliqué avec une force en direction axiale ou radiale par rapport à l'axe de rotation (D).

5. Ferrure selon la revendication 3 ou 4, **caractérisée en ce que** les éléments de blocage (71) dans la position de blocage (A) sont en prise directe ou indirecte avec le polygone (40).

6. Ferrure selon l'une quelconque des revendications 1 à 5, **caractérisée en ce que** l'élément de couplage (50) est formé de deux parties, dans laquelle l'élément de couplage (50) présente un élément d'entraînement de poignée (52) qui est relié de façon solidaire en rotation avec la poignée (10) et présente un élément d'entraînement de polygone (60) qui est relié de façon solidaire en rotation avec le polygone (40).

7. Ferrure selon la revendication 6, **caractérisée en ce que** les éléments d'actionnement (51) de l'élément de couplage (50) sont formés sur l'élément d'entraînement de poignée (52).

8. Ferrure selon la revendication 6 ou 7, **caractérisée en ce que** l'élément d'entraînement de polygone (60) présente au moins un évidement de blocage (61) destiné à recevoir les éléments de blocage (71).

9. Ferrure selon l'une quelconque des revendications 6 à 8, **caractérisée en ce que** l'élément d'entraînement de polygone (60) présente un premier segment de bride (62).

10. Ferrure selon la revendication 9, **caractérisée en ce que** les évidements de blocage (61) sont disposés dans le premier segment de bride (62).

11. Ferrure selon l'une quelconque des revendications 6 à 10, **caractérisée en ce qu'au** moins un évidement (68) est disposé dans une surface frontale (62a) tournée vers la poignée (10) d'un côté frontal (62b) de l'élément d'entraînement de polygone (60).

12. Ferrure selon l'une quelconque des revendications 6 à 11, **caractérisée en ce que** les éléments d'actionnement (51) dans la seconde position de poignée (II) sont en prise dans les évidements de blocage (61) de l'élément d'entraînement de polygone (60).

13. Ferrure selon l'une quelconque des revendications 6 à 12, **caractérisée en ce que** l'élément d'entraînement de polygone (60) présente du côté poignée un segment formant un col (68).

14. Ferrure selon l'une quelconque des revendications 6 à 13, **caractérisée en ce que** l'élément d'entraînement de polygone (60) présente un second segment de bride (64), dans laquelle dans le second segment de bride (63) ou dans le premier segment de bride (62) est disposé au niveau périphérique au moins un creux d'enclenchement (65) pour au moins un élément d'enclenchement (90).

15. Ferrure selon l'une quelconque des revendications 6 à 14, **caractérisée en ce que** l'élément d'entraînement de poignée (52) présente au moins une barre de positionnement (66) et **en ce que** le corps de butée (20) présente au moins une poche de positionnement (22) pour les barres de positionnement, dans laquelle chaque barre de positionnement (66) peut être mise en prise dans la première position de poignée (I) avec la poche de positionnement (22) respectivement affectée.
